# EUROPEAN PATENT SPECIFICATION

(11) **EP 2 663 049 B1**
(45) Date of publication and mention of the grant of the patent: **05.04.2017**
(21) Application number: 12753032.7
(22) Date of filing: 28.02.2012
(51) Int. Cl.: H04L 29/06, H04L 9/32, H04L 29/12, H04L 9/08

(54) **AUTHENTICATION METHOD BASED ON DHCP, DHCP SERVER AND CLIENT**
AUTHENTIFIZIERUNGSVERFAHREN AUF DHCP-BASIS SOWIE DHCP-SERVER UND -CLIENT
PROCÉDÉ D'AUTHENTIFICATION DHCP, SERVEUR DHCP ET TERMINAL CLIENT

(30) Priority: 28.02.2011 CN 201110047862
(43) Date of publication of application: 13.11.2013
(73) Proprietor: Huawei Technologies Co., Ltd., Longgang District Shenzhen, Guangdong 518129 (CN)
(72) Inventor: BI, Xiaoyu, Shenzhen Guangdong 518129 (CN); CHEN, Jiajia, Shenzhen Guangdong 518129 (CN)
(74) Representative: Thun, Clemens
(86) International application number: PCT/CN2012/071740
(87) International publication number: WO 2012/116633

(56) References cited:
- CN-A- 101 141 253
- CN-A- 101 184 099
- CN-A- 101 272 247
- US-B1- 6 826 690
- SHENG JIANG HUAWEI TECHNOLOGIES CO ET AL: "Secure DHCPv6 Using CGAs; draft-ietf-dhc-secure-dhcpv6-02.txt", SECURE DHCPV6 USING CGAS; DRAFT-IETF-DHC-SECURE-DHCPV6-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 2, 21 December 2010 (2010-12-21), pages 1-28, XP015073173, [retrieved on 2010-12-21]
- SHUE C A ET AL: "A Unified Approach to Intra-domain Security", COMPUTATIONAL SCIENCE AND ENGINEERING, 2009. CSE '09. INTERNATIONAL CONFERENCE ON, IEEE, PISCATAWAY, NJ, USA, 29 August 2009 (2009-08-29), pages 219-224, XP031544213, ISBN: 978-1-4244-5334-4

## Description

### TECHNICAL FIELD

The present invention relates to the field of communications technologies, and in particular to a DHCP-based authentication method, a DHCP server, and a client.

### BACKGROUND

DHCP (Dynamic Host Configuration Protocol, Dynamic Host Configuration Protocol) is a network protocol of a local area network. DHCP uses UDP (User Datagram Protocol, User Datagram Protocol). By using a DHCP protocol, a DHCP server can automatically allocate IP addresses to a DHCP client logging in to a TCP/IP network.

A DHCP server should be authenticated to ensure security of communication between a DHCP client and the DHCP server. Currently, the method of delayed authentication is usually adopted to authenticate a DHCP server. In the method, a shared key is configured in advance for a DHCP client and a DHCP server. The basic procedures of the method are as follows:
The DHCP client broadcasts a DHCP discover message (DHCPDISCOVER) which carries an authentication option and a client identity to a local subnet. After receiving this message, the DHCP server on the network calculates a session key according to the client identity and the shared key, calculates an authentication code of the DHCP discover message according to the session key, uses the authentication code to fill in the authentication option, constructs a DHCP offer message (DHCPOFFER), and sends the DHCP offer message to the DHCP client. The DHCP client calculates a session key by using the shared key locally stored, uses the session key to verify whether authentication information in the authentication option is correct, constructs a DHCP request message (DHCPREQUEST), calculates an authentication code of the message by using the session key, uses the authentication code to fill in the authentication option, and sends the DHCP request message to a chosen DHCP server. After receiving the DHCP request message, the DHCP server verifies it using a session key.

When an authentication is performed between a DHCP server and a DHCP client, the authentication needs to be performed by the DHCP server and the DHCP client based on a shared key configured in advance, therefore the mode of the authentication is rather complicated.

US 6826690B1 discloses that a device certificate identifies a particular device using a globally-unique device identifier and contains a public key associated therewith. A private key stored in protected storage of the device is used to digitally sign outbound messages, enabling communicating devices to authenticate one another using the associated device certificate and public key, before returning a response. Devices functioning as servers can thereby securely participate in dynamic, automatic address assignment services using a service such as a Boot Protocol or Dynamic Host Configuration Protocol, and/or to update address information stored in a Domain Name System (DNS) server, ensuring that the update is authentic, and when the DNS is also authenticated, ensuring that a legitimate DNS has been contacted.

### SUMMARY

Embodiments of the present invention provide a DHCP-based authentication method, a DHCP server, and a client to implement the authentication between a DHCP server and a DHCP client in a simple way.
The embodiments of the present invention adopt the following technical solutions.

A DHCP-based authentication method, including:
receiving, by a DHCP server, a DHCP discover message sent by a DHCP client, where the DHCP discover message includes a URL of a CA and an identifier of the DHCP client;
discovering, by the DHCP server, the CA according to the URL of the CA, and sending an authorization request to the CA, where the authorization request carries the identifier of the DHCP client;
receiving, by the DHCP server, authorization information returned by the CA, where the authorization information includes a certificate of the DHCP client;
authenticating, by the DHCP server, the DHCP client according to the certificate of the DHCP client; and
sending, by the DHCP server, a DHCP offer message to the DHCP client, where the DHCP offer message includes the authorization information returned by the CA, so that the DHCP client authenticates the DHCP server according to the authorization information.

A DHCP-based authentication method, including:
receiving, by a DHCP server, a DHCP discover message sent by a DHCP client;
sending, by the DHCP server, an authorization request to a CA, where the authorization request includes the DHCP discover message;
receiving, by the DHCP server, authorization information returned by the CA, where the authorization information is produced by the CA after the CA authenticates the DHCP client according to the authorization request; and
sending, by the DHCP server, a DHCP offer message to the DHCP client, where the DHCP offer message includes the authorization information returned by the CA, so that the DHCP client authenticates the DHCP server according to the authorization information.

A DHCP-based authentication method, including:
sending, by a DHCP client, a DHCP discover message to a DHCP server,
where the DHCP discover message includes a URL of a CA and an identifier of the DHCP client;
receiving, by the DHCP client, a DHCP offer message sent by the DHCP server after the DHCP server authenticates the DHCP client, where the DHCP offer message includes authorization information returned by the CA to the DHCP server; and
authenticating, by the DHCP client, the DHCP server according to the authorization information.

A DHCP-based authentication method, including:
sending, by a DHCP client, a DHCP discover message to a DHCP server;
receiving, by the DHCP client, a DHCP offer message sent by the DHCP server, where the DHCP offer message includes authorization information returned by a CA to the DHCP server after the CA authenticates the DHCP client; and
authenticating, by the DHCP client, the DHCP server according to the authorization information.

A DHCP server, including:
a receiving module, configured to receive a DHCP discover message sent by a DHCP client, where the DHCP discover message includes a URL of a CA and an identifier of the DHCP client; and
a sending module, configured to discover the CA according to the URL of the CA and send an authorization request to the CA, where the authorization request carries the identifier of the DHCP client; where:
   the receiving module is also configured to receive authorization information returned by the CA, and the authorization information includes a certificate of the DHCP client; and
   the DHCP server also includes:
      a authenticating module, configured to complete authentication for the DHCP client according to the certificate of the DHCP client in the authorization information received by the receiving module; and
      the sending module is also configured to send a DHCP offer message to the DHCP client, and the DHCP offer message includes the authorization information returned by the CA and received by the receiving module, so that the DHCP client authenticates the DHCP server according to the authorization information.

A DHCP server, including:
a receiving module, configured to receive a DHCP discover message sent by a DHCP client; and
a sending module, configured to send an authorization request to a CA according to the DHCP discover message received by the receiving module, where the authorization request includes the DHCP discover message; where:
   the receiving module is also configured to receive authorization information returned by the CA, and the authorization information is produced by the CA after the CA authenticates the DHCP client according to the authorization request; and
   the sending module is also configured to send a DHCP offer message to the DHCP client, and the DHCP offer message includes the authorization information returned by the CA and received by the receiving module, so that the DHCP client authenticates the DHCP server according to the authorization information.

A DHCP client, including:
a sending module, configured to send a DHCP discover message to a DHCP server, where the DHCP discover message includes a URL of a CA and an identifier of the DHCP client;
a receiving module, configured to receive a DHCP offer message sent by the DHCP server after the DHCP server authenticates the DHCP client, where the DHCP offer message includes authorization information returned by the CA to the DHCP server; and
a authenticating module, configured to authenticate the DHCP server according to the authorization information in the DHCP offer message received by the third receiving module.

A DHCP client, including:
a sending module, configured to send a DHCP discover message to a DHCP server;
a receiving module, configured to receive a DHCP offer message sent by the DHCP server, where the DHCP offer message includes authorization information returned by the CA to the DHCP server after the CA authenticates the DHCP client; and
a authenticating module, configured to authenticate the DHCP server according to the authorization information in the DHCP offer message received by the receiving module.

The embodiments of the present invention provide a DHCP-based authentication method, a DHCP server, and a client. The DHCP server authenticates the DHCP client according to authorization information returned by the CA, or the CA implements authentication for the DHCP client. The DHCP server sends the authorization information returned by the CA through the DHCP offer message to the DHCP client, and the DHCP client authenticates the DHCP server according to the authorization information. Compared with the prior art, the DHCP server and DHCP client do not need a shared key configured in advance, and the authentication between the DHCP server and the DHCP client may be implemented simply by using the CA. Therefore, the authentication manner is relatively simple.

### BRIEF DESCRIPTION OF THE DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method according to Embodiment 1 of the present invention;
FIG. 2 is a flowchart of a method according to Embodiment 2 of the present invention;
FIG. 3 is a flowchart of a method according to Embodiment 3 of the present invention;
FIG. 4 is a flowchart of a method according to Embodiment 4 of the present invention;
FIG. 5 is a flowchart of a method according to Embodiment 5 of the present invention;
FIG. 6 is a flowchart of a method according to Embodiment 6 of the present invention;
FIG. 7 is a flowchart of a method according to Embodiment 7 of the present invention;
FIG. 8 is a flowchart of a method according to Embodiment 8 of the present invention;
FIG. 9a, FIG. 9b, and FIG. 9c are structural schematic diagrams of a DHCP server according to Embodiment 9 of the present invention;
FIG. 10a, FIG. 10b, and FIG. 10c are structural schematic diagrams of a DHCP client according to Embodiment 10 of the present invention;
FIG. 11a, FIG. 11b, and FIG. 11c are structural schematic diagrams of a DHCP server according to Embodiment 11 of the present invention;
FIG. 12a, FIG. 12b, and FIG. 12c are structural schematic diagrams of a DHCP client according to Embodiment 12 of the present invention; and
FIG. 13 is a schematic structural diagram of a certificate authority according to Embodiment 13 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

To make the advantages of the technical solutions of the present invention more comprehensible, the following describes the present invention in detail with reference to the accompanying drawings and embodiments.

In all the embodiments of the present invention, the information stored on a DHCP client includes a public key and a private key of the DHCP client, a public key of a CA (Certificate Authority, certificate authority), and a certificate of the DHCP client. The information stored on a DHCP server includes a public key and a private key of the DHCP server, and the public key of the CA. The information stored on the CA includes a public key and a private key of the CA, the public key and/or certificate of the DHCP server, and the public key and/or certificate of the DHCP client.

### Embodiment 1

This embodiment provides a DHCP-based authentication method. In this embodiment, a DHCP server authenticates a DHCP client.

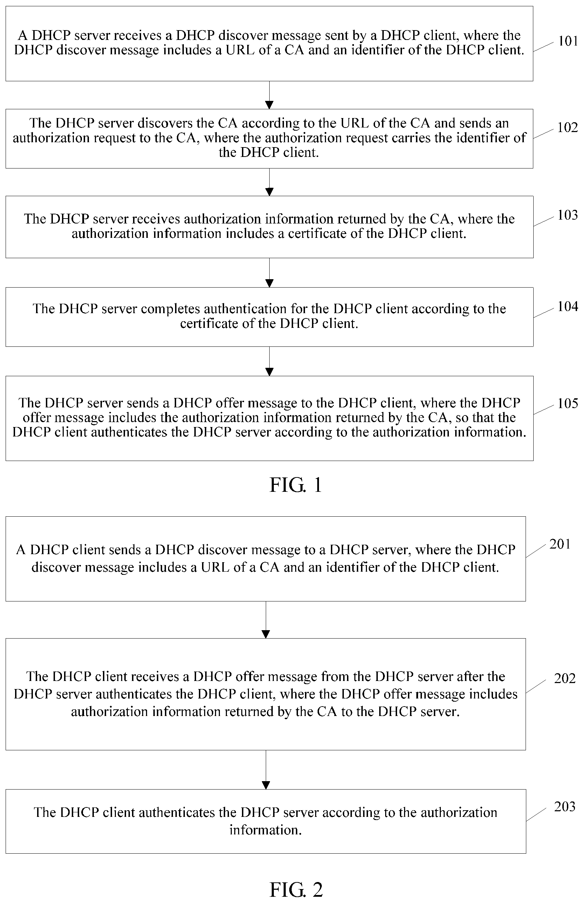

As shown in FIG. 1, on a DHCP server side, the method includes:
101. The DHCP server receives a DHCP discover message (DHCPDISCOVER) sent by a DHCP client, where the DHCP discover message includes a URL (Universal Resource Locator, uniform resource locator) of a CA and an identifier of the DHCP client.
102. The DHCP server discovers the CA according to the URL of the CA and sends an authorization request to the CA, where the authorization request carries the identifier of the DHCP client.
103. The DHCP server receives authorization information returned by the CA, where the authorization information includes a certificate of the DHCP client.

Optionally, the authorization information returned by the CA also includes a random parameter generated by the CA; and
after the DHCP server receives the authorization information returned by the CA, the method also includes:
deriving, by the DHCP server, a shared key according to the random parameter, where the shared key is used to protect security of communication between the DHCP server and the DHCP client.

The random parameter is received by the DHCP server through a secure tunnel between the DHCP server and the CA;
or
the random parameter is encrypted using a public key of the DHCP server; and accordingly, before the DHCP server derives the shared key according to the random parameter, the method also includes:
decrypting, by the DHCP server, the encrypted random parameter by using a private key of the DHCP server, so as to acquire the random parameter.

Optionally, the authorization information returned by the CA also includes a shared key generated by the CA according to a random parameter or a shared key directly produced by the CA; and
after the DHCP server receives the authorization information returned by the CA, the method also includes:
acquiring, by the DHCP server, the shared key from the authorization information, where the shared key is used to protect security of communication between the DHCP server and the DHCP client.

Optionally, the shared key is received by the DHCP server through a secure tunnel between the DHCP server and the CA;
or
the shared key is encrypted using the public key of the DHCP server; and accordingly, the acquiring the shared key by the DHCP server from the authorization information includes:
decrypting, by the DHCP server, the encrypted shared key by using the private key of the DHCP server, so as to acquire the shared key.

104. The DHCP server completes authentication for the DHCP client according to a Certificate of the DHCP client.

ADHCP discover message in step 301 also includes a signature performed by using the private key of the DHCP client to enhance security of the DHCP discover message. Accordingly, in step 304, a DHCP server completes the authentication (authentication) for the DHCP client according to the certificate of the DHCP client, that is, a DHCP server implements verification (verification) for the signature by using a public key of the DHCP client included in the certificate.

105. The DHCP server sends a DHCP offer message (DHCPOFFER) to the DHCP client, where the DHCP offer message includes authorization information returned by the CA, so that the DHCP client authenticates the DHCP server according to the authorization information.

In this embodiment, the DHCP client may be a base station, but is not limited to it.

This embodiment of the present invention provides the DHCP-based authentication method. A DHCP server completes authentication for a DHCP client according to authorization information returned by a CA and sends the authorization information returned by the CA to the DHCP client by using a DHCP offer message. The DHCP client authenticates the DHCP server according to the authorization information. Compared with the prior art, the DHCP server and DHCP client do not need a shared key configured in advance, and the authentication between the DHCP server and the DHCP client may be implemented simply by using the CA. Therefore, the authentication manner is relatively simple.

### Embodiment 2

Corresponding to embodiment 1, this embodiment provides a DHCP-based authentication method. In this embodiment, a DHCP server authenticates a DHCP client.

As shown in FIG. 2, on a DHCP client side, the method includes:
201. The DHCP client sends a DHCP discover message (DHCPDISCOVER) to the DHCP server, where the DHCP discover message includes a URL of a CA and an identifier of the DHCP client.

A DHCP discover message also needs to be protected by a signature performed by using a private key of the DHCP client to enhance security of the DHCP discover message, so that a DHCP server verifies the signature by using a public key corresponding to the private key of the DHCP client, that is, to implement authentication for the DHCP client.

202. The DHCP client receives a DHCP offer message (DHCPOFFER) sent by the DHCP server after the DHCP server authenticates the DHCP client, where the DHCP offer message includes authorization information returned by the CA to the DHCP server.

203. The DHCP client authenticates the DHCP server according to the authorization information.

Optionally, the authorization information is a random parameter doubly encrypted first using a private key of the CA and then using the public key of the DHCP client; and
after the DHCP client receives the DHCP offer message sent by the DHCP server after the DHCP server authenticates the DHCP client, the method also includes:
decrypting, by the DHCP client, the doubly encrypted random parameter to acquire the random parameter; and
deriving, by the DHCP client, a shared key according to the random parameter, where the shared key is used to protect security of communication between the DHCP server and the DHCP client.

Optionally, the authorization information is an intermediate shared key and a random parameter which are doubly encrypted first using the private key of the CA and then using the public key of the DHCP client. The intermediate shared key is calculated by the CA according to a shared key generated by the CA and a shared-key identifier. The shared-key identifier is calculated by the CA according the random parameter and a public key of the CA; and
after the DHCP client receives the DHCP offer message sent by the DHCP server after the DHCP server authenticates the DHCP client, the method also includes:
decrypting, by the DHCP client, the doubly encrypted intermediate shared key and random parameter to acquire the intermediate shared key and the random parameter; and
calculating, by the DHCP client, the shared-key identifier according to the random parameter and the public key of the CA, and calculating the shared key according to the shared-key identifier and the intermediate shared key, where the shared key is used to protect security of communication between the DHCP server and the DHCP client.

Further, the receiving of a DHCP offer message by the DHCP client after the DHCP server authenticates the DHCP client includes:
receiving, by the DHCP client, the DHCP offer message sent by the DHCP server and protected by the shared key, where the shared key is obtained by the DHCP server according to the authorization information returned by the CA; and
the authenticating the DHCP server by the DHCP client according to the authorization information includes:
   authenticating, by the DHCP client, the protected DHCP offer message by using the shared key.

Optionally, the authorization information includes a first random parameter doubly encrypted first using the private key of the CA and then using the public key of the DHCP client, and the DHCP offer message includes a second random parameter singly encrypted using the public key of the DHCP client; and
the authenticating the DHCP server by the DHCP client according to the authorization information includes:
decrypting, by the DHCP client, the doubly encrypted first random parameter to obtain the first random parameter and decrypting the singly encrypted second random parameter to obtain the second random parameter; and
comparing, by the DHCP client, the first random parameter and the second random parameter, and if they are identical, the authentication succeeds.

In this embodiment, the DHCP client may be a base station, but is not limited to it.

This embodiment of the present invention provides the DHCP-based authentication method. A DHCP client receives a DHCP offer message sent by a DHCP server after the DHCP server authenticates the DHCP client, where the DHCP offer message includes authorization information returned by a CA to the DHCP server. The DHCP client authenticates the DHCP server according to the authorization information. Compared with the prior art, the DHCP server and DHCP client do not need a shared key configured in advance, and the authentication between the DHCP server and the DHCP client may be implemented simply by using the CA. Therefore, the authentication manner is relatively simple.

### Embodiment 3

This embodiment provides a DHCP-based authentication method. In this embodiment, a CA authenticates a DHCP client.

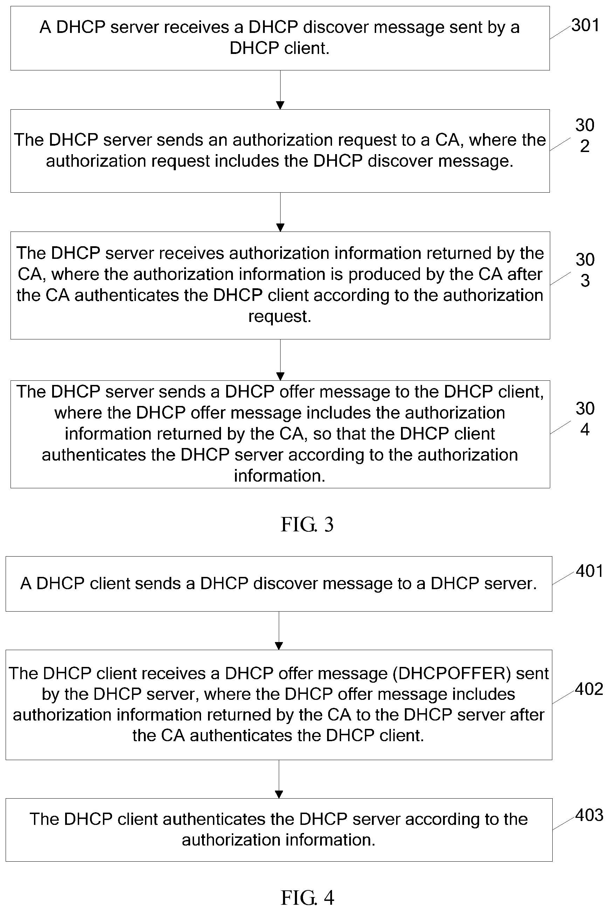

As shown in FIG. 3, on a DHCP server side, the method includes:
301. The DHCP server receives a DHCP discover message (DHCPDISCOVER) sent by the DHCP client.

The DHCP discover message also includes a signature performed by using a private key of the DHCP client to enhance security of the DHCP discover message, so that the CA verifies the signature by using a public key corresponding to the private key of the DHCP client after receiving the DHCP discover message, that is, to implement authentication for the DHCP client.

302. The DHCP server sends an authorization request to a CA, where the authorization request includes the DHCP discover message.

Step 302 is intended to replace the DHCP server with the CA to complete the authentication for a DHCP client.

303. The DHCP server receives authorization information returned by the CA, where the authorization information is produced by the CA after the CA authenticates the DHCP client according to the authorization request. The authentication for the DHCP client refers to verification by the CA for the signature by using the public key corresponding to the private key of the DHCP client.

Optionally, authorization information returned by the CA includes a random parameter produced by the CA; and
after the DHCP server receives the authorization information returned by the CA, the method also includes:
deriving, by the DHCP server, a shared key according to the random parameter, where the shared key is used to protect security of communication between the DHCP server and the DHCP client.

The random parameter is received by the DHCP server through a secure tunnel between the DHCP server and the CA;
or
the random parameter is encrypted using a public key of the DHCP server; and accordingly, before the DHCP server derives the shared key according to the random parameter, the method also includes:
decrypting, by the DHCP server, the encrypted random parameter by using a private key of the DHCP server, so as to acquire the random parameter.

Optionally, the authorization information returned by the CA is a shared key generated by the CA according to a random parameter or a shared key directly produced by the CA; and
after the DHCP server receives the authorization information returned by the CA, the method also includes:
acquiring, by the DHCP server, the shared key from the authorization information, where the shared key is used to protect security of communication between the DHCP server and the DHCP client.

The shared key is received by the DHCP server through a secure tunnel between the DHCP server and the CA;
or
the shared key is encrypted using the public key of the DHCP server; and accordingly, the acquiring the shared key by the DHCP server from the authorization information includes:
decrypting, by the DHCP server, the encrypted shared key by using the private key of the DHCP server, so as to acquire the shared key.

304. The DHCP server sends a DHCP offer message (DHCPOFFER) to the DHCP client, where the DHCP offer message includes authorization information returned by the CA, so that the DHCP client authenticates the DHCP server according to the authorization information.

In this embodiment, the DHCP client may be a base station, but is not limited to it.

This embodiment of the present invention provides the DHCP-based authentication method. A CA completes authentication for a DHCP client according to an authorization request sent by a DHCP server. The DHCP server sends authorization information returned by the CA to the DHCP client by using a DHCP offer message, so that the DHCP client authenticates the DHCP server according to the authorization information. Compared with the prior art, the DHCP server and DHCP client do not need a shared key configured in advance, and the authentication between the DHCP server and the DHCP client may be implemented simply by using the CA. Therefore, the authentication manner is relatively simple.

### Embodiment 4

Corresponding to embodiment 3, this embodiment provides a DHCP-based authentication method. In this embodiment, a CA authenticates a DHCP client.

As shown in FIG. 4, on a DHCP client side, the method includes:
401. The DHCP client sends a DHCP discover message (DHCPDISCOVER) to a DHCP server.

The DHCP discover message needs to be protected by a signature of a private key of the DHCP client to enhance security of the DHCP discover message, so that the CA verifies the DHCP discover message by using a public key corresponding to the private key of the DHCP client after receiving the DHCP discover message, that is, to implement authentication for the DHCP client.

402. The DHCP client receives a DHCP offer message (DHCPOFFER) from the DHCP server, where the DHCP offer message includes authorization information returned by the CA to the DHCP server, after the CA authenticates the DHCP client.

The DHCP server sends an authorization request to the CA, after the DHCP receives the DHCP discover message from the DHCP client; the CA returns authorization information to the DHCP server according to the authorization request.

403. The DHCP client authenticates the DHCP server according to the authorization information.

Optionally, the authorization information is a random parameter doubly encrypted first using a private key of the CA and then using the public key of the DHCP client; and
after the DHCP client receives the DHCP offer message from the DHCP server, the method also includes:
decrypting, by the DHCP client, the doubly encrypted random parameter to acquire the random parameter; and
deriving, by the DHCP client, a shared key according to the random parameter, where the shared key is used to protect security of communication between the DHCP server and the DHCP client.

Optionally, the authorization information is an intermediate shared key and a random parameter which are doubly encrypted first using the private key of the CA and then using the public key of the DHCP client. The intermediate shared key is calculated by the CA according to a shared key generated by the CA and a shared-key identifier. The shared-key identifier is calculated by the CA according the random parameter and a public key of the CA; and
after the DHCP client receives the DHCP offer message from the DHCP server, the method also includes:
decrypting, by the DHCP client, the doubly encrypted intermediate shared key and random parameter to acquire the intermediate shared key and the random parameter; and
calculating, by the DHCP client, the shared-key identifier according to the random parameter and the public key of the CA, and calculating the shared key according to the shared-key identifier and the intermediate shared key, where the shared key is used to protect security of communication between the DHCP server and the DHCP client.

Further, the receiving, by the DHCP client, of a DHCP offer message sent by the DHCP server includes:
receiving, by the DHCP client, the DHCP offer message sent by the DHCP server and protected by the shared key, where the shared key is obtained by the DHCP server according to the authorization information returned by the CA; and
the authenticating the DHCP server by the DHCP client according to the authorization information includes:
   authenticating, by the DHCP client, the protected DHCP offer message by using the shared key.

Optionally, the authorization information includes a first random parameter doubly encrypted first using the private key of the CA and then using the public key of the DHCP client, and the DHCP offer message includes a second random parameter singly encrypted using the public key of the DHCP client; and
the authenticating, by the DHCP client, the DHCP server according to the authorization information includes:
decrypting, by the DHCP client, the doubly encrypted first random parameter to obtain the first random parameter and decrypting the singly encrypted second random parameter to obtain the second random parameter; and
comparing, by the DHCP client, the first random parameter and the second random parameter, and if they are identical, the authentication succeeds.

In this embodiment, the DHCP client may be a base station, but is not limited to it.

This embodiment of the present invention provides the DHCP-based authentication method. After authenticating a DHCP client, a CA returns authorization information to a DHCP server. The DHCP server sends the authorization information returned by the CA to the DHCP client by using a DHCP offer message. The DHCP client authenticates the DHCP server according to the authorization information. Compared with the prior art, the DHCP server and DHCP client do not need a shared key configured in advance, and the authentication between the DHCP server and the DHCP client may be implemented simply by using the CA. Therefore, the authentication manner is relatively simple.

### Embodiment 5

This embodiment provides a DHCP-based authentication method. In this embodiment, a DHCP client is a base station. A CA sends authorization information to a DHCP server, including a singly encrypted random parameter and a doubly encrypted random parameter.

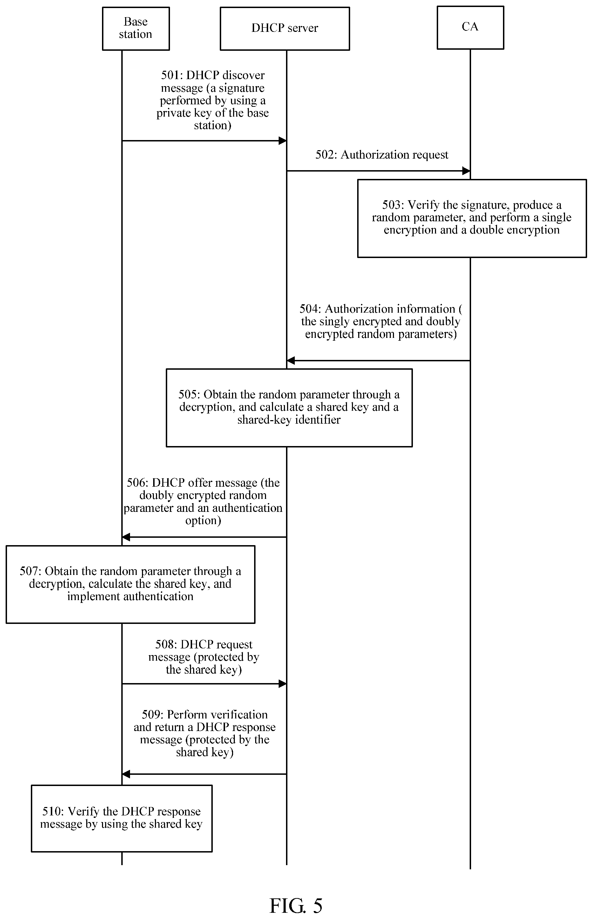

As shown in FIG. 5, the DHCP-based method for authentication between the DHCP server and the DHCP client includes:
501. After authentication is successfully performed between the CA and the DHCP server, the base station sends a DHCP discover message (DHCPDISCOVER) to the DHCP server, where the DHCP discover message includes an authentication option, which includes a digital signature calculated by a private key of the base station, an optional random parameter, and other information.

Optionally, the authentication option may also include a URL option, which carries a CA address; and specifically, the URL option may be option 98.

The structure of the authentication option is shown in Table 1:

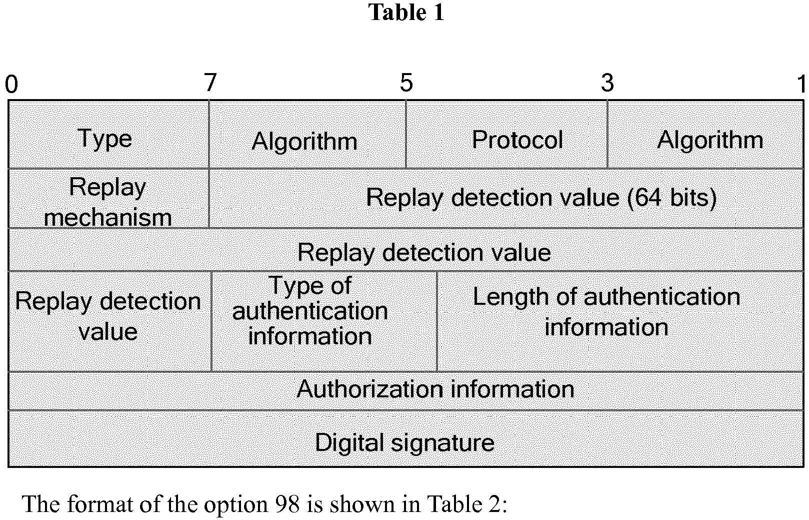

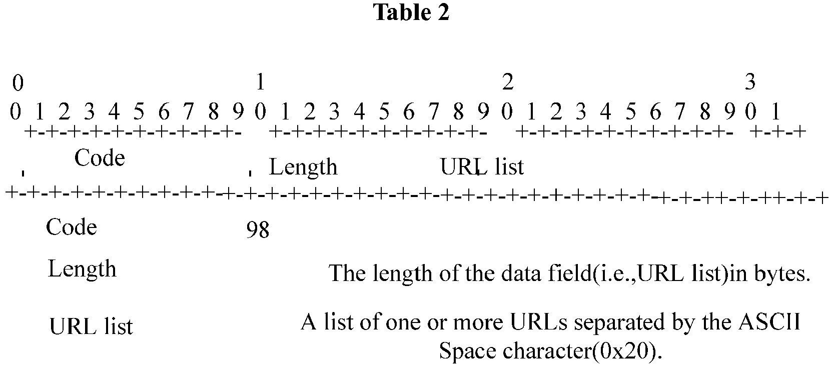

502. After receiving the DHCP discover message, the DHCP server sends an authorization request to the CA, where the authorization request includes the DHCP discover message protected by the signature performed by using the private key of the base station.

Optionally, if the DHCP discover message includes the URL option, the DHCP server discovers the CA according to the URL and acquires a base station certificate, uses a public key of the base station in the base station certificate to verify a base station signature, and sends the authorization request to the CA.

503. After receiving the authorization request from the DHCP server, the CA produces the random parameter, singly encrypts the random parameter with a public key of the DHCP server, and doubly encrypts the random parameter first using a private key of the CA and then the public key of the base station.

The CA first completes the authentication (verification) for the DHCP server, implements a verification (authentication) for the signature by using the public key of the base station, and after the verification succeeds, sends the authorization information to the DHCP server.

504. The CA sends the singly encrypted random parameter and the doubly encrypted random parameter, as authorization information, to the DHCP server.

Optionally, the CA may also send random parameters to the DHCP server through a secure tunnel between the CA and the DHCP server.

505. After receiving the authorization information sent by the CA, the DHCP server decrypts the singly encrypted random parameter by using a private key of the DHCP server, so as to obtain the random parameter, or directly acquires the random parameter through the secure tunnel. Then, the DHCP server derives a shared key and a shared-key identifier by using the random parameter. Specifically, the DHCP server may use the random parameter and the public key of the CA to calculate the shared key and shared-key identifier.

506. The DHCP server sends a DHCP offer message (DHCPOFFER) to the base station, where the DHCP offer message includes an authentication option of authorization information.

The authorization information includes the doubly encrypted random parameter and shared-key identifier. The authentication option includes a digital signature calculated by using the shared key.

507. After receiving the DHCP offer message, the base station first decrypts the random parameter doubly encrypted using the private key of the base station and the public key of the CA to obtain the random parameter, calculates the shared key by using the random parameter and the public key of the CA, identifies the shared key with the shared-key identifier in the authorization information, calculates the digital signature by using the shared key, and compares the digital signature with the digital signature in the authentication option. If they are identical, the authentication succeeds.

508. The base station sends a DHCP request message (DHCPREQUEST) to the DHCP server and uses the shared key to protect the DHCP request message.

509. The DHCP server verifies the DHCP request message by using the shared key, returns a DHCP response message (DHCPACK) to the base station, and protects the DHCP response message by using the shared key.

510. The base station verifies the DHCP response message by using the shared key.

It should be noted that the CA allocates the random parameter only to a legal DHCP server because only a legal DHCP server may obtain a random parameter. After configuration of information such as an IP address, the CA, DHCP server, and base station release the random parameter, making the shared key in the DHCP server and base station expire immediately.

This embodiment of the present invention provides the DHCP-based authentication method. A DHCP server calculates a shared key according to a random parameter returned by a CA, sends a doubly encrypted random parameter returned by the CA to a base station by using a DHCP offer message, and the base station calculates a shared key according to the random parameter. Compared with the prior art, both the DHCP server and base station acquire the shared key according to information returned by the CA and therefore do not need a shared key configured in advance, thereby reducing the burden of managing the shared key and avoiding security hazards.

### Embodiment 6

This embodiment provides a DHCP-based authentication method. In this embodiment, a DHCP client is a base station, and a CA sends authorization information to a DHCP server, including a singly encrypted shared key, a singly encrypted shared-key identifier, and a doubly encrypted random parameter.

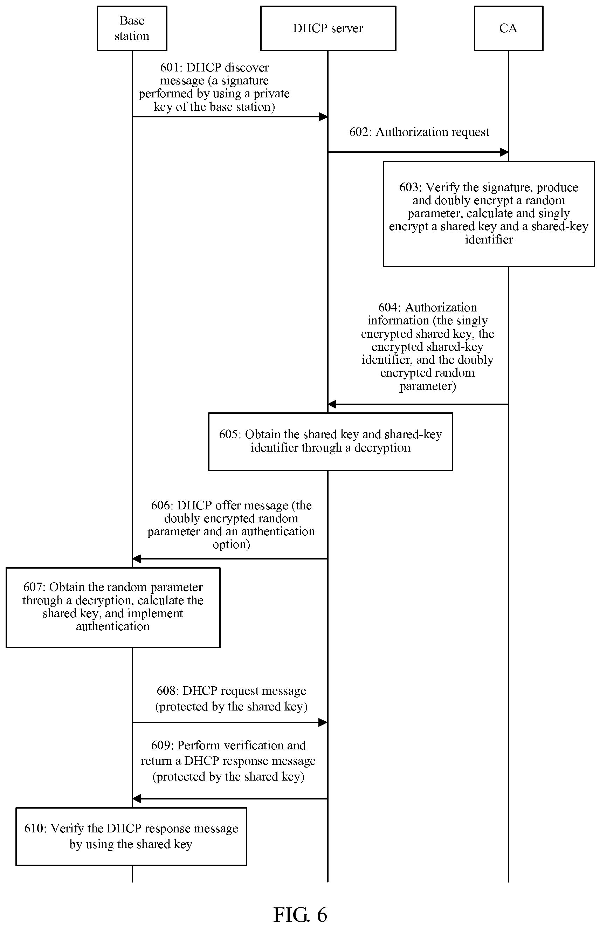

As shown in FIG. 6, the DHCP-based method for authentication between the DHCP server and the DHCP client includes:
601. After authentication is successfully performed between the CA and the DHCP server, the base station sends a DHCP discover message (DHCPDISCOVER) to the DHCP server, where the DHCP discover message includes an authentication option, which includes a digital signature calculated by a private key of the base station, an optional random parameter, and other information.

Optionally, the authentication option may also include a URL option, which carries the address of a certificate server (namely CA).

602. After receiving the DHCP discover message, the DHCP server sends an authorization request to the CA, where the authorization request includes the DHCP discover message and the DHCP discover message is protected by the signature performed by using the private key of the base station.

Optionally, if the DHCP discover message includes the URL option, the DHCP server discovers the CA according to the URL and acquires a base station certificate, uses a public key of the base station in the base station certificate to verify a base station signature, and sends the authorization request to the CA.

603. After receiving the authorization request from the DHCP server, the CA produces the random parameter, calculates the shared key and the shared-key identifier according to the random parameter, singly encrypts the shared key and the shared-key identifier by using a public key of the DHCP server, and doubly encrypts the random parameter first using a private key of the CA and then using the public key of the base station

The CA first completes verification for the DHCP server, then verifies the signature by using the public key of the base station, and after the verification succeeds, sends authorization information to the DHCP server.

604. The CA sends the singly encrypted shared key and shared-key identifier and the doubly encrypted random parameter to the DHCP server.

Optionally, the CA may send the shared key and shared-key identifier to the DHCP server through a secure tunnel between the CA and the DHCP server.

605. After receiving the authorization information sent by the CA, the DHCP server decrypts the singly encrypted shared key and shared-key identifier by using a private key of the DHCP server, so as to obtain the shared key and the shared-key identifier.

606. The DHCP server sends a DHCP offer message (DHCPOFFER) to the base station, where the DHCP offer message includes an authentication option of authorization information.

The authorization information includes the doubly encrypted random parameter and shared-key identifier. The authentication option includes a digital signature calculated by using the shared key.

607. After receiving the DHCP offer message, the base station first decrypts the random parameter doubly encrypted first using the private key of the base station and then using a public key of the CA to obtain the random parameter, calculates the shared key by using the random parameter and the public key of the CA, identifies the shared key with the shared-key identifier in the authorization information, calculates the digital signature by using the shared key, and compares the digital signature with the digital signature in the authentication option. If they are identical, the authentication succeeds.

608. The base station sends a DHCP request message (DHCPREQUEST) to the DHCP server and protects the DHCP request message by using the shared key.

609. The DHCP server verifies the DHCP request message by using the shared key, returns a DHCP response message (DHCPACK) to the base station, and protects the DHCP response message by using the shared key.

610. The base station verifies the DHCP response message by using the shared key.

It should be noted that the CA allocates the random parameter only to a legal DHCP server because only a legal DHCP server may obtain a random parameter. After configuration of information such as an IP address, the CA, DHCP server, and base station release the random parameter, making the shared key in the DHCP server and base station expire immediately.

This embodiment of the present invention provides the DHCP-based authentication method. A DHCP server receives a shared key returned by a CA, sends a doubly encrypted random parameter returned by the CA to a base station by using in a DHCP offer message. The base station calculates a shared key according to the random parameter. Compared with the prior art, both the DHCP server and base station acquire the shared key according to information returned by the CA and therefore do not need a shared key configured in advance, thereby reducing the burden of managing the shared key and avoiding security hazards.

### Embodiment 7

This embodiment provides a DHCP-based authentication method. In this embodiment, a DHCP client is a base station, and a CA sends to a DHCP server authorization information which includes a singly encrypted first shared key, a doubly encrypted random parameter, and a doubly encrypted second shared key.

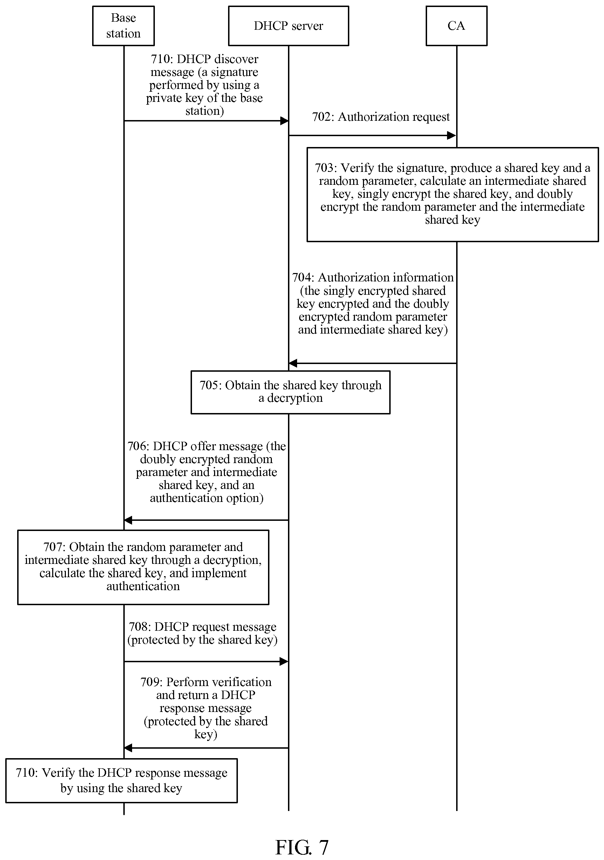

As shown in FIG. 7, the DHCP-based method for authentication between the DHCP server and the DHCP client includes:
701. After authentication is successfully performed between the CA and the DHCP server, the base station sends a DHCP discover message (DHCPDISCOVER) to the DHCP server, where the DHCP discover message includes an authentication option, which includes a digital signature calculated by a private key of the base station, an optional random parameter, and other information.

Optionally, the authentication option may also include a URL option, which carries the address of the CA.

702. After receiving the DHCP discover message, the DHCP server sends to the CA an authorization request, which includes the DHCP discover message protected by the signature performed by using the private key of the base station.

Optionally, if the DHCP discover message includes the URL option, the DHCP server discovers the CA according to the URL and acquires a base station certificate, uses a public key of the base station in the base station certificate to verify a base station signature, and sends the authorization request to the CA.

703. After receiving the authorization request from the DHCP server, the CA produces the first shared key and random parameter, calculates a shared-key identifier by using the random parameter and a public key of the CA, obtains the second shared key by performing exclusive OR on the first shared key and the shared-key identifier, singly encrypts the first shared key and the shared-key identifier by using a public key of the DHCP, and doubly encrypts the random parameter and the second shared key first using a private key of the CA and then using the public key of the base station.

The CA first completes verification for the DHCP server, then verifies the signature by using the public key of the base station, and after the verification succeeds, sends authorization information to the DHCP server.

704. The CA sends the singly encrypted first shared key and shared-key identifier and the doubly encrypted random parameter and second shared key, as authorization information, to the DHCP server.

Optionally, the CA may also send the first shared key and shared-key identifier to the DHCP server through a secure tunnel between the CA and the DHCP server.

705. After receiving the authorization information sent by the CA, the DHCP server decrypts the singly encrypted first shared key and shared-key identifier by using a private key of the DHCP server, so as to obtain the first shared key and the shared-key identifier.

706. The DHCP server sends a DHCP offer message (DHCPOFFER) to the base station, where the DHCP offer message includes an authentication option of authorization information.

The authorization information includes the doubly encrypted random parameter and second shared key and the shared-key identifier. The authentication option includes a digital signature calculated by using the first shared key.

707. After receiving the DHCP offer message, the base station first decrypts the doubly encrypted random parameter and second shared key by using the private key of the base station and the public key of the CA, so as to obtain the random parameter and the second shared key. The base station calculates the shared-key identifier by using the random parameter and a first shared key of the CA, then calculates the first shared key by performing exclusive OR on the second shared key and the shared-key identifier, identifies the first shared key by using the shared-key identifier in authorization information, calculates a digital signature by using the first shared key, and compares the digital signature with the digital signature in the authentication option. If they are identical, the authentication succeeds.

708. The base station sends a DHCP request message (DHCPREQUEST) to the DHCP server and uses the first shared key to protect the DHCP request message.

709. The DHCP server verifies the DHCP request message by using the first shared key, returns a DHCP response message (DHCPACK) to the base station, and uses the first shared key to protect the DHCP response message.

710. The base station verifies the DHCP response message by using the shared key.

It should be noted that the CA allocates the random parameter only to a legal DHCP server because only a legal DHCP server may obtain a random parameter. After configuration of information such as an IP address, the CA, DHCP server, and base station release the random parameter, making the shared key in the DHCP server and base station expire immediately.

This embodiment of the present invention provides the DHCP-based authentication method. A DHCP server receives a first shared key returned by a CA, sends a doubly encrypted second shared key and random parameter returned by the CA to a base station by using a DHCP offer message. The base station calculates a first shared key according to the second shared key and the random parameter. Compared with the prior art, both the DHCP server and base station acquire the shared key according to information returned by the CA and therefore do not need a shared key configured in advance, thereby reducing the burden of managing the shared key and avoiding security hazards.

### Embodiment 8

This embodiment provides a DHCP-based authentication method. In this embodiment, a DHCP client is a base station, and a CA sends authorization information to a DHCP server, including a singly encrypted random parameter and a doubly encrypted random parameter.

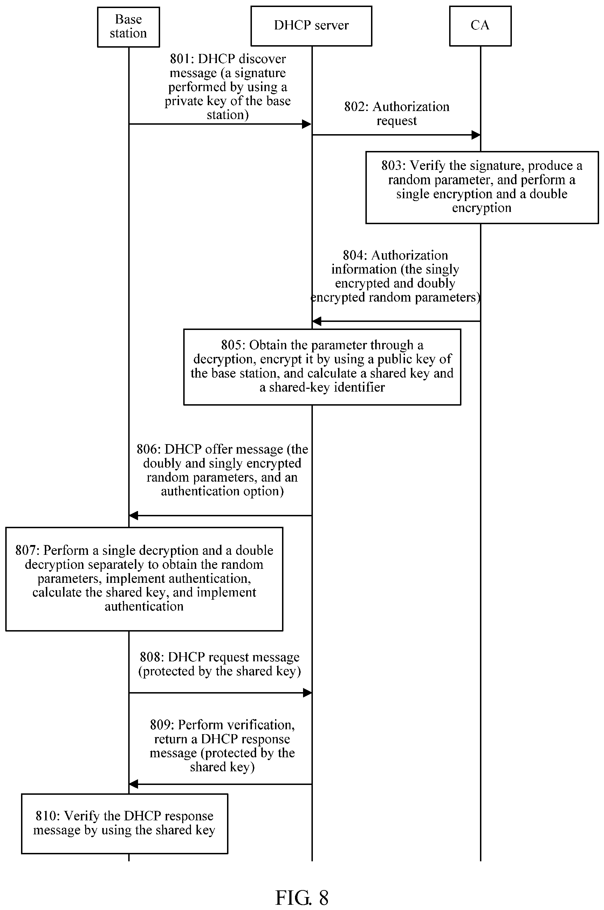

As shown in FIG. 8, the DHCP-based method for authentication between the DHCP server and the DHCP client includes:
801. After authentication is successfully performed between the CA and the DHCP server, the base station sends a DHCP discover message (DHCPDISCOVER) to the DHCP server, where the DHCP discover message includes an authentication option, which includes a digital signature calculated by a private key of the base station, an optional random parameter, and other information.

Optionally, the authentication option may also include a URL option, which carries the address of the CA.

802. After receiving the DHCP discover message, the DHCP server sends an authorization request to the CA, where the authorization request includes the DHCP discover message protected by the signature performed by using the private key of the base station.

Optionally, if the DHCP discover message includes the URL option, the DHCP server discovers the CA according to the URL and acquires a base station certificate, uses a public key of the base station in the base station certificate to verify a base station signature, and sends the authorization request to the CA.

803. The CA produces the random parameter after receiving the authorization request from the DHCP server, singly encrypts the random parameter by using a public key of the DHCP server, and doubly encrypts the random parameter first using a private key of the CA and then using the public key of the base station.

The CA first completes verification for the DHCP server, then verifies the signature by using the public key of the base station, and after the verification succeeds, sends authorization information to the DHCP server.

804. The CA sends the singly encrypted random parameter and the doubly encrypted random parameter, as authorization information, to the DHCP server.

Optionally, the CA may also send random parameters to the DHCP server through a secure tunnel between the CA and the DHCP server.

805. After receiving the authorization information sent by the CA, the DHCP server decrypts the singly encrypted random parameter by using a private key of the DHCP server, so as to obtain the random parameter; encrypts the random parameter by using the public key of the base station; and calculates the shared key and shared-key identifier by performing DH exchange on the random parameter in the DHCP discover message sent by the base station.

806. The DHCP server sends a DHCP offer message (DHCPOFFER) to the base station, where the DHCP offer message includes an authentication option of authorization information.

The authorization information includes the doubly encrypted random parameter, and the random parameter and shared-key identifier that are singly encrypted using the public key of the base station. The authentication option includes a digital signature calculated by using the shared key.

807. After receiving the DHCP offer message, the base station first doubly decrypts the doubly encrypted random parameter by using the private key of the base station and a public key of the CA, so as to obtain the random parameter; singly decrypt the singly encrypted random parameter by using the private key of the base station, so as to obtain the random parameter; and compares the random parameter obtained through the double decryption with the random parameter obtained through the single decryption. If they are identical, the authentication succeeds. Then, the base station calculates the shared key by performing DH exchange on the random parameter, identifies the shared key by using the shared-key identifier in the authorization information, calculates a digital signature by using the shared key, and compares the digital signature with the signature in the authentication option. If they are identical, the authentication succeeds.

808. The base station sends a DHCP request message (DHCPREQUEST) to the DHCP server and uses the shared key to protect the DHCP request message.

809. The DHCP server verifies the DHCP request message by using the shared key, returns a DHCP response message (DHCPACK) to the base station, and uses the shared key to protect the DHCP response message.

810. The base station verifies the DHCP response message by using the shared key.

It should be noted that the CA allocates the random parameter only to a legal DHCP server because only a legal DHCP server may obtain a random parameter. After configuration of information such as an IP address, the CA, DHCP server, and base station release the random parameter, making the shared key in the DHCP server and base station expire immediately.

This embodiment of the present invention provides the DHCP-based authentication method. A DHCP server calculates a shared key according to a random parameter sent by a base station, and sends a doubly encrypted random parameter returned by a CA and a random parameter singly encrypted by the DHCP server itself to the base station by using a DHCP offer message. The base station compares and authenticates the random parameters obtained through the double decryption and the single decryption and calculates the shared key according to the random parameter of the base station. Compared with the prior art, both the DHCP server and base station acquire the shared key according to the random number of the base station and therefore do not need a shared key configured in advance, thereby reducing the burden of managing the shared key and avoiding security hazards.

### Embodiment 9

This embodiment provides a DHCP server. The DHCP server in this embodiment may implement the processes according to the embodiments described in FIG. 1, and FIG. 5 to FIG. 8.

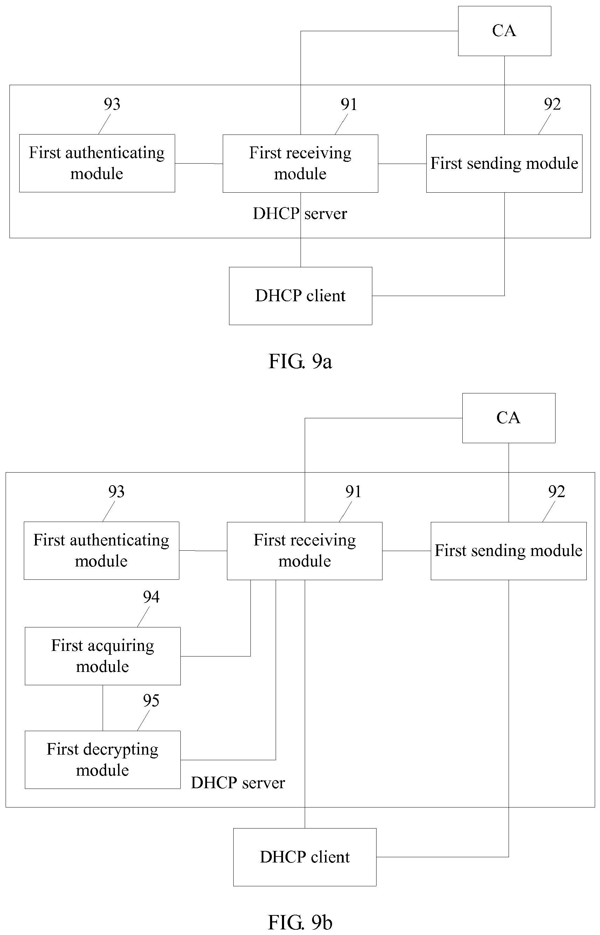

As shown in FIG. 9a, the DHCP server includes:
a first receiving module 91, configured to receive a DHCP discover message sent by a DHCP client, where the DHCP discover message includes a URL of a CA and an identifier of the DHCP client; and
a first sending module 92, configured to discover the CA according to the URL of the CA and send an authorization request to the CA, where the authorization request carries the identifier of the DHCP client; where:
   the first receiving module 91 is also configured to receive the authorization information that is returned by the CA and includes the certificate of the DHCP client; and
   the DHCP server also includes:
      a first authenticating module 93, configured to authenticate the DHCP client according to the certificate of the DHCP client in the authorization information received by the first receiving module 91; and
      the first sending module 92 is also configured to send a DHCP offer message to the DHCP client, and the DHCP offer message includes the authorization information returned by the CA and received by the first receiving module 91, so that the DHCP client authenticates the DHCP server according to the authorization information.

Further, the DHCP discover message received by the first receiving module 91 includes a signature performed by using a private key of the DHCP client; and
the first authenticating module 93 is specifically configured to verify the signature by using a public key of the DHCP client in the certificate of the DHCP client in the authorization information received by the first receiving module 91.

Optionally, the authorization information returned by the CA and received by the first receiving module4 91 is a random parameter produced by the CA; and as shown in FIG. 9b, the DHCP server also includes:
a first acquiring module 94, configured to derive a shared key according to the random parameter received by the first receiving module 91, where the shared key is used to protect security of communication between the DHCP server and the DHCP client.

The random parameter is received by the first receiving module 91 through a secure tunnel between the DHCP server and the CA;
or
the random parameter is encrypted using a public key of the DHCP server; and accordingly, as shown in FIG. 9b, the DHCP server also includes:
a first decrypting module 95, configured to decrypt the encrypted random parameter by using a private key of the DHCP server, so as to acquire the random parameter; and accordingly, the first acquiring module 94 is specifically configured to derive the shared key according to the random parameter acquired by the first decrypting module 95.

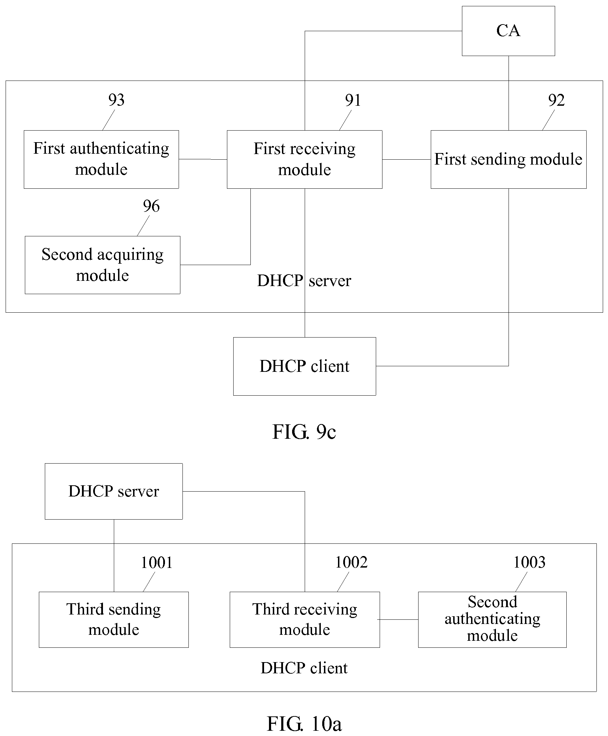

Optionally, the authorization information returned by the CA and received by the first receiving module 91 is a shared key generated by the CA according to the random parameter or a shared key directly produced by the CA; and
as shown in FIG. 9c, the DHCP server also includes:
a second acquiring module 96, configured to acquire the shared key from the authorization information received by the first receiving module 91, where the shared key is used to protect security of communication between the DHCP server and the DHCP client.

The shared key is received by the DHCP server through a secure tunnel between the DHCP server and the CA;
or
the shared key is encrypted using the public key of the DHCP server; and accordingly, as shown in FIG. 9c, the second acquiring module 96 is specifically configured to decrypt the encrypted shared key by using the private key of the DHCP server, so as to acquire the shared key.

This embodiment of the present invention provides the DHCP server. The DHCP server completes authentication for a DHCP client according to authorization information returned by a CA and sends the authorization information returned by the CA to the DHCP client by using a DHCP offer message. The DHCP client authenticates the DHCP server according to the authorization information. Compared with the prior art, the DHCP server and DHCP client do not need a shared key configured in advance, and the authentication between the DHCP server and the DHCP client may be implemented simply by using the CA. Therefore, the authentication manner is relatively simple. The DHCP client acquires the shared key according to information returned by the CA and forwarded by the DHCP server and therefore does not need a shared key configured in advance, thereby reducing the burden of managing the shared key and avoiding security hazards.

### Embodiment 10

Corresponding to embodiment 9, this embodiment provides a DHCP client. The DHCP client in this embodiment may implement the processes according to the embodiments described in FIG. 2, and FIG.5 to FIG. 8.

As shown in FIG. 10a, the DHCP client includes:
a third sending module 1001, configured to send a DHCP discover message to a DHCP server, where the DHCP discover message includes a URL of a CA and an identifier of the DHCP client;
a third receiving module 1002, configured to receive a DHCP offer message after the DHCP server authenticates the DHCP client, where the DHCP offer message includes authorization information returned by the CA to the DHCP server; and
a second authenticating module 1003, configured to authenticate the DHCP server according to the authorization information in the DHCP offer message received by the third receiving module 1002.

Further, the DHCP discover message received by the third receiving module 1002 also includes a signature performed by using a private key of the DHCP client so that the DHCP server verifies the signature by using a public key of the DHCP client.

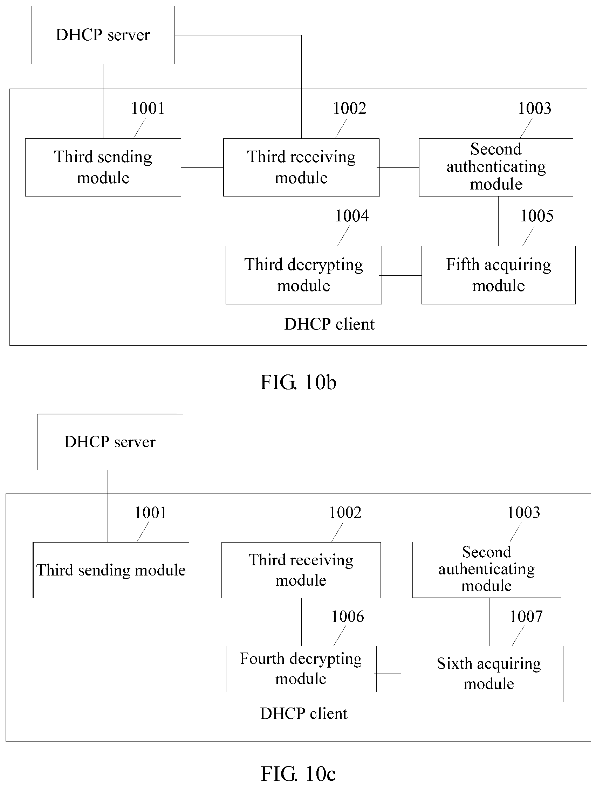

Optionally, the authorization information is a random parameter doubly encrypted first using a private key of the CA and then using the public key of the DHCP client; and
as shown in FIG. 10b, the DHCP client also includes:
a third decrypting module 1004, configured to decrypt the doubly encrypted random parameter to acquire the random parameter; and
a fifth acquiring module 1005, configured to derive a shared key according to the random parameter acquired by the third decrypting module 1004, where the shared key is used to protect security of communication between the DHCP server and the DHCP client.

Optionally, the authorization information is an intermediate shared key and a random parameter which are doubly encrypted first using the private key of the CA and then using the public key of the DHCP client. The intermediate shared key is calculated by the CA according to a shared key generated by the CA and a shared-key identifier. The shared-key identifier is calculated by the CA according the random parameter and a public key of the CA; and
as shown in FIG. 10c, the DHCP client also includes:
a fourth decrypting module 1006, configured to decrypt the doubly encrypted intermediate shared key and random parameter to acquire the intermediate shared key and the random parameter; and
a sixth acquiring module 1007, configured to calculate the shared-key identifier according to the random parameter acquired by the fourth decrypting module 1006 and the public key of the CA, and calculate the shared key according to the shared-key identifier and the intermediate shared key that is acquired by the fourth decrypting module 1006, where the shared key is used to protect security of communication between the DHCP server and the DHCP client.

Further, the third receiving module 1002 is specifically configured to receive the DHCP offer message sent by the DHCP server and protected by the shared key. The shared key is obtained by the DHCP server according to the authorization information returned by the CA; and
the second authenticating module 1003 is specifically configured to use the shared key to authenticate the protected DHCP offer message which is received by the third receiving module 1002.

Optionally, the authorization information includes a first random parameter doubly encrypted first using the private key of the CA and then using the public key of the DHCP client. The DHCP offer message includes a second random parameter singly encrypted using the public key of the DHCP client; and
the second authenticating module 1003 is specifically configured to decrypt the doubly encrypted first random parameter to obtain the first random parameter, decrypt the singly encrypted second random parameter to obtain the second random parameter, and compare the first random parameter with the second random parameter. If they are identical, the authentication succeeds.

This embodiment of the present invention provides the DHCP client. The DHCP client receives a DHCP offer message sent by a DHCP server after the DHCP server authenticates the DHCP client, where the DHCP offer message includes authorization information returned by a CA to the DHCP server. The DHCP client authenticates the DHCP server according to the authorization information. Compared with the prior art, the DHCP server and DHCP client do not need a shared key configured in advance, and the authentication between the DHCP server and the DHCP client may be implemented simply by using the CA. Therefore, the authentication manner is relatively simple. The DHCP client acquires the shared key according to information returned by the CA and forwarded by the DHCP server and therefore does not need a shared key configured in advance, thereby reducing the burden of managing the shared key and avoiding security hazards.

### Embodiment 11

This embodiment provides a DHCP server. The DHCP server in this embodiment may implement the processes according to the embodiments described in FIG. 3, and FIG. 5 to FIG. 8.

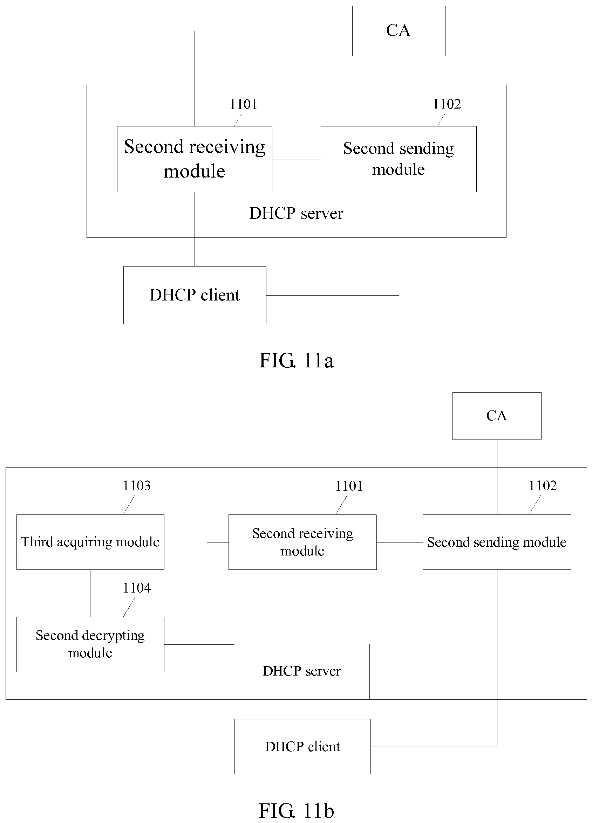

As shown in FIG. 11a, the DHCP server includes:
a second receiving module 1101, configured to receive a DHCP discover message sent by a DHCP client; and
a second sending module 1102, configured to send an authorization request to a CA according to the DHCP discover message received by the first receiving module 91, where the authorization request includes the DHCP discover message; where:
   the second receiving module 1101 is also configured to receive authorization information returned by the CA, and the authorization information is produced by the CA after the CA authenticates the DHCP client according to the authorization request; and
   the second sending module 1102 is also configured to send a DHCP offer message to the DHCP client, and the DHCP offer message includes the authorization information returned by the CA and received by the second receiving module 1101, so that the DHCP client authenticates the DHCP server according to the authorization information.

Further, to enhance security of the DHCP discover message, the DHCP discover message received by the second receiving module 1101 also includes a signature performed by using a private key of the DHCP client; and
the authorization information received by the second receiving module 1101 is produced by the CA after the CA authenticates the DHCP client according to the authorization request.

Optionally, the authorization information returned by the CA and received by the second receiving module 1101 is a random parameter produced by the CA; and
as shown in FIG. 11b, the DHCP server also includes:
a third acquiring module 1103, configured to derive a shared key according to the random parameter received by the second receiving module 1101, where the shared key is used to protect security of communication between the DHCP server and the DHCP client.

The random parameter is received by the second receiving module 1101 through a secure tunnel between the DHCP server and the CA;
or
the random parameter is encrypted using a public key of the DHCP server; and accordingly, as shown in FIG. 11b, the DHCP server also includes:
a second decrypting module 1104, configured to decrypt the encrypted random parameter by using a private key of the DHCP server, so as to acquire the random parameter; and accordingly, the third acquiring module 1103 is specifically configured to derive the shared key according to the random parameter acquired by the second decrypting module 1104.

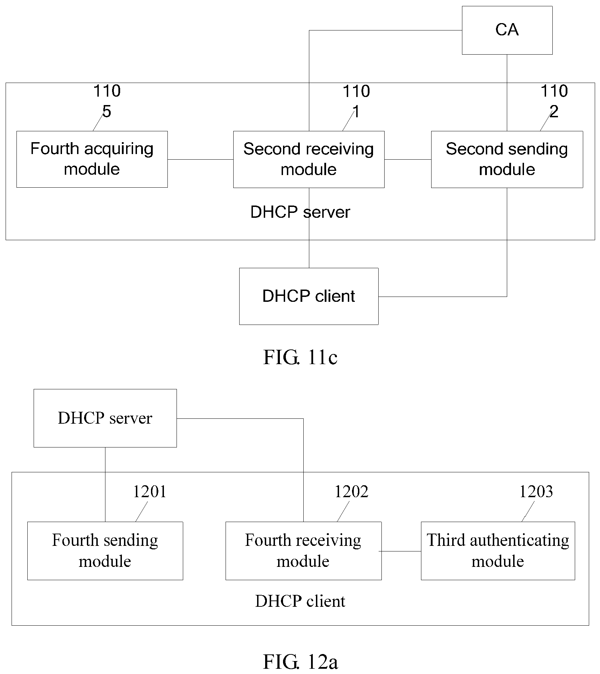

Optionally, the authorization information returned by the CA and received by the second receiving module 1101 is the shared key generated according to the random parameter or directly produced by the CA; and
as shown in FIG. 11c, the DHCP server also includes:
a fourth acquiring module 1105, configured to acquire the shared key from the authorization information received by the second receiving module 1101, where the shared key is used to protect security of communication between the DHCP server and the DHCP client.

The shared key is received by the second receiving module 1101 through a secure tunnel between the DHCP server and the CA;
or
the shared key is encrypted using the public key of the DHCP server; and accordingly, the fourth acquiring module 1105 is specifically configured to decrypt the encrypted shared key by using the private key of the DHCP server, so as to acquire the shared key.

In this embodiment, the DHCP client may be a base station, but is not limited to it.

This embodiment of the present invention provides the DHCP server. A CA completes authentication for a DHCP client according to an authorization request sent by the DHCP server, and sends authorization information returned by the CA to the DHCP client by using a DHCP offer message, so that the DHCP client authenticates the DHCP server according to the authorization information. Compared with the prior art, the DHCP server and DHCP client do not need a shared key configured in advance, and the authentication between the DHCP server and the DHCP client may be implemented simply by using the CA. Therefore, the authentication manner is relatively simple. Both the DHCP server and DHCP client acquire the shared key according to information returned by the CA and therefore do not need a shared key configured in advance, thereby reducing the burden of managing the shared key and avoiding security hazards.

### Embodiment 12

Corresponding to embodiment 11, this embodiment provides a DHCP client. The DHCP client in this embodiment may implement the processes according to the embodiments described in FIG. 4 to FIG. 8.

As shown in FIG. 12a, the DHCP client includes:
a fourth sending module 1201, configured to send a DHCP discover message to a DHCP server;
a fourth receiving module 1202, configured to receive a DHCP offer message sent by the DHCP server, where the DHCP offer message includes authorization information returned by the CA to the DHCP server after the CA authenticates the DHCP client; and
a third authenticating module 1203, configured to authenticate the DHCP server according to the authorization information in the DHCP offer message received by the fourth receiving module 1202.

Further, the DHCP discover message received by the fourth receiving module 1202 also includes a signature performed by using a private key of the DHCP client so that the CA verifies the signature by using a public key of the DHCP client.

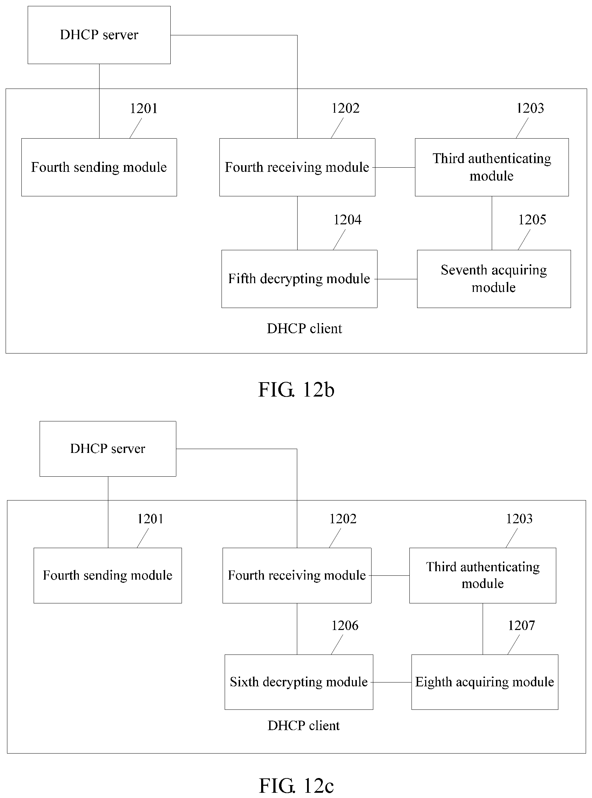

Optionally, the authorization information is a random parameter doubly encrypted first using a private key of the CA and then using the public key of the DHCP client; and
as shown in FIG. 12b, the DHCP client also includes:
a fifth decrypting module 1204, configured to decrypt the doubly encrypted random parameter to acquire the random parameter; and
a seventh acquiring module 1205, configured to derive a shared key according to the random parameter acquired by the fifth decrypting module 1204, where the shared key is used to protect security of communication between the DHCP server and the DHCP client.

Optionally, the authorization information is an intermediate shared key and a random parameter which are doubly encrypted first using the private key of the CA and then using the public key of the DHCP client. The intermediate shared key is calculated by the CA according to a shared key generated by the CA and a shared-key identifier. The shared-key identifier is calculated by the CA according the random parameter and a public key of the CA; and
as shown in FIG. 12c, the DHCP client also includes:
a sixth decrypting module 1206, configured to decrypt the doubly encrypted intermediate shared key and random parameter to acquire the intermediate shared key and the random parameter; and
an eighth acquiring module 1207, configured to calculate the shared-key identifier according to the random parameter acquired by the sixth decrypting module 1206 and the public key of the CA, and calculate the shared key according to the shared-key identifier and the intermediate shared key that is acquired by the sixth decrypting module 1206, where the shared key is used to protect security of communication between the DHCP server and the DHCP client.

Further, the fourth receiving module 1202 is specifically configured to receive the DHCP offer message sent by the DHCP server and protected by the shared key. The shared key is obtained by the DHCP server according to the authorization information returned by the CA; and
the third authenticating module 1203 is specifically configured to use the shared key to authenticate the protected DHCP offer message which is received by the fourth receiving module 1202.

Optionally, the authorization information includes a first random parameter doubly encrypted first using the private key of the CA and then using the public key of the DHCP client, and the DHCP offer message includes a second random parameter singly encrypted using the public key of the DHCP client; and
the third authenticating module 1203 is specifically configured to decrypt the doubly encrypted first random parameter to obtain the first random parameter, decrypt the singly encrypted second random parameter to obtain the second random parameter, and compare the first random parameter with the second random parameter. If they are identical, the authentication succeeds.

In this embodiment, the DHCP client may be a base station, but is not limited to it.

This embodiment of the present invention provides the DHCP client. After authenticating the DHCP client, a CA returns authorization information to a DHCP server. The DHCP server sends the authorization information returned by the CA to the DHCP client by using a DHCP offer message. The DHCP client authenticates the DHCP server according to the authorization information. Compared with the prior art, the DHCP server and DHCP client do not need a shared key configured in advance, and the authentication between the DHCP server and the DHCP client may be implemented simply by using the CA. Therefore, the authentication manner is relatively simple. The DHCP client acquires the shared key according to information returned by the CA and forwarded by the DHCP server and therefore does not need a shared key configured in advance, thereby reducing the burden of managing the shared key and avoiding security hazards.

### Embodiment 13

This embodiment provides a certificate authority. The certificate authority in this embodiment may implement the processes according to the embodiments described in FIG. 1 to FIG. 8.

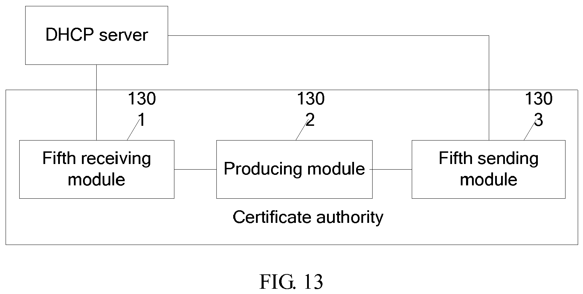

As shown in FIG. 13, the certificate authority includes:
a fifth receiving module 1301, configured to receive an authorization request sent by a DHCP server;
a producing module 1302, configured to produce authorization information according to the authorization request; and
a fifth sending module 1303, configured to send the authorization information to the DHCP server.

Optionally, the producing module 1302 is specifically configured to produce the authorization information after authentication performed for a DHCP client according to the authorization request succeeds. After the fifth sending module 1303 sends the authorization information to the DHCP server, the DHCP server sends the authorization information to the DHCP client so that the DHCP client authenticates the DHCP server according to the authorization information.

Optionally, after the producing module 1302 produces the authorization information according to the authorization request, the fifth sending module 1303 sends the authorization information to the DHCP server. After authenticating the DHCP client, the DHCP sends the authorization information to the DHCP client so that the DHCP client authenticates the DHCP server according to the authorization information.

The certificate authority provided in this embodiment of the present invention receives an authorization request sent by a DHCP server, produces authorization information according to the authorization request, and sends the authorization information to the DHCP server. The DHCP server sends the authorization information to a DHCP client so that the DHCP client authenticates the DHCP server according to the authorization information. Compared with the prior art, a CA may produce authorization information according to the authorization request sent by the DHCP server, and the DHCP client may implement authentication for the DHCP server simply according to the authorization information returned by the DHCP server and forwarded by the DHCP server. This authentication manner is relatively simple.

The DHCP server, DHCP client, and certificate authority provided in the embodiments of the present invention may implement the method embodiments provided above. For specific functional implementation, please refer to the specifications in the method embodiments, which are not repeated herein. The DHCP-based authentication method, DHCP server and client, and certificate authority provided in the embodiments of the present invention may apply to DHCP-based authentication, but is not limited to it.

A person of ordinary skill in the art may understand that all or a part of the processes of the methods in the embodiments may be implemented by using a computer program to instruct relevant hardware. The program may be stored in a computer readable storage medium. When the program is running, the processes of the methods in the embodiments may be performed. The storage medium may be a magnetic disk, an optical disk, a read-only memory (Read-Only Memory, ROM), or a random access memory (Random Access Memory, RAM) or the like.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A DHCP-based authentication method, **characterized by** comprising:
receiving (101), by a DHCP server, a DHCP discover message sent by a DHCP client, wherein the DHCP discover message comprises a universal resource locator, URL, of a CA and an identifier of the DHCP client;
discovering (102), by the DHCP server, the CA according to the URL of the CA, and sending an authorization request to the CA, wherein the authorization request carries the identifier of the DHCP client;
receiving (103), by the DHCP server, authorization information returned by the CA, wherein the authorization information comprises a certificate of the DHCP client;
authenticating (104), by the DHCP server, the DHCP client according to the certificate of the DHCP client; and
sending (105), by the DHCP server, a DHCP offer message to the DHCP client, wherein the DHC P offer message comprises the authorization information returned by the CA, so that the DHCP client authenticates the DHCP server according to the authorization information.

2. The method according to claim 1, wherein the DHCP discover message further comprises: a signature performed by using a private key of the DHCP client; and
the authenticating, by the DHCP server, the DHCP client according to the certificate of the DHCP client comprises:
verifying, by the DHCP server, the signature by using a public key of the DHCP client comprised in the certificate.

3. The method according to claim 1, wherein
the authorization information returned by the CA comprises a random parameter produced by the CA; and after the receiving, by the DHCP server, the authorization information returned by the CA, the method further comprises: deriving, by the DHCP server, a shared key according to the random parameter, wherein the shared key is used to protect security of communication between the DHCP server and the DHCP client.

4. The method according to claim 3, wherein:
the random parameter is received by the DHCP server through a secure tunnel between the DHCP server and the CA;
or
the random parameter is encrypted using a public key of the DHCP server; and accordingly, before the deriving, by the DHCP server, a shared key according to the random parameter, the method further comprises:
decrypting, by the DHCP server, the encrypted random parameter by using a private key of the DHCP server, so as to acquire the random parameter.

5. The method according to claim 1, wherein
the authorization information returned by the CA comprises a shared key generated by the CA according to a random parameter or a shared key directly produced by the CA; and after the receiving, by the DHCP server, the authorization information returned by the CA, the method further comprises: acquiring, by the DHCP server, the shared key from the authorization information, wherein the shared key is used to protect security of communication between the DHCP server and the DHCP client.

6. The method according to claim 5, wherein:
the shared key is received by the DHCP server through a secure tunnel between the DHCP server and the CA;
or
the shared key is encrypted using a public key of the DHCP server; and accordingly, the acquiring the shared key by the DHCP server from the authorization information comprises:
decrypting, by the DHCP server, the encrypted shared key by using a private key of the DHCP server, so as to acquire the shared key.

7. A dynamic host configuration protocol based, DHCP-based, authentication method, **characterized by** comprising:
receiving (301), by a DHCP server, a DHCP discover message sent by a DHCP client;
sending (302), by the DHCP server, an authorization request to a certificate authority, CA" wherein the authorization request comprises the DHCP discover message;
receiving (303), by the DHCP server, authorization information returned by the CA, wherein the authorization information is produced by the CA after the CA authenticates the DHCP client according to the authorization request; and
sending (304), by the DHCP server, a DHCP offer message to the DHCP client, wherein the DHCP offer message comprises the authorization information returned by the CA, so that the DHCP client authenticates the DHCP server according to the authorization information.

8. The method according to claim 7, wherein the DHCP discover message further comprises: a signature performed by using a private key of the DHCP client; and
the authenticating, by the CA, the DHCP client according to the authorization request comprises:
authenticating, by the CA, the signature by using a public key of the DHCP client.

9. A DHCP-based authentication method, **characterized by** comprising:
sending (201), by a DHCP client, a DHCP discover message to a DHCP server, wherein the DHCP discover message comprises a URL of a CA and an identifier of the DHCP client;
receiving (202), by the DHCP client, a DHCP offer message sent by the DHCP server after the DHCP server authenticates the DHCP client, wherein the DHCP offer message comprises authorization information returned by the CA to the DHCP server; and
authenticating (203), by the DHCP client, the DHCP server according to the authorization information.

10. The method according to claim 9, wherein the DHCP discover message further comprises a signature performed by using a private key of the DHCP client, so that the DHCP server verifies the signature by using a public key of the DHCP client.

11. A DHCP-based authentication method, **characterized by** comprising:
sending (401), by a DHCP client, a DHCP discover message to a DHCP server;
receiving (402), by the DHCP client, a DHCP offer message sent by the DHCP server, wherein the DHCP offer message comprises authorization information returned by a CA to the DHCP server after the CA authenticates the DHCP client; and
authenticating (403), by the DHCP client, the DHCP server according to the authorization information.

12. The method according to claim 11, wherein the DHCP discover message further comprises a signature performed by using a private key of the DHCP client, so that the DHCP server verifies the signature by using a public key of the DHCP client.

13. A DHCP server, **characterized by** comprising:
a receiving module (91), configured to receive a DHCP discover message sent by a DHCP client, wherein the DHCP discover message comprises a URL of a CA and an identifier of the DHCP client; and
a sending module (92), configured to discover the CA according to the URL of the CA and send an authorization request to the CA, wherein the authorization request carries the identifier of the DHCP client; wherein:
the receiving module (91) is further configured to receive authorization information returned by the CA, and the authorization information comprises a certificate of the DHCP client; and
the DHCP server further comprises:
a authenticating module (93), configured to complete authentication for the DHCP client according to the certificate of the DHCP client in the authorization information received by the receiving module (91); and
the sending module (92) is further configured to send a DHCP offer message to the DHCP client, and the DHCP offer message comprises the authorization information returned by the CA and received by the receiving module (91), so that the DHCP client authenticates the DHCP server according to the authorization information.

14. The DHCP server according to claim 13, wherein the DHCP discover message received by the receiving module (91) further comprises a signature performed by using a private key of the DHCP client; and
the authenticating module (93) is specifically configured to verify the signature by using a public key of the DHCP client in the certificate of the DHCP client in the authorization information received by the receiving module (91).

15. A DHCP server, **characterized by** comprising:
a receiving module (1101), configured to receive a DHCP discover message sent by a DHCP client; and
a sending module (1102), configured to send an authorization request to a CA according to the DHCP discover message received by the receiving module (1101), wherein the authorization request comprises the DHCP discover message; wherein:
the receiving module (1101) is further configured to receive authorization information returned by the CA, and the authorization information is produced by the CA after the CA authenticates the DHCP client according to the authorization request; and
the sending module (1102) is further configured to send a DHCP offer message to the DHCP client, and the DHCP offer message comprises the authorization information returned by the CA and received by the receiving module (1101), so that the DHCP client authenticates the DHCP server according to the authorization information.

16. The DHCP server according to claim 15, wherein the DHCP discover message received by the receiving module (1101) further comprises a signature performed by using a private key of the DHCP client; and
the authorization information received by the receiving module (1101) is produced by the CA after the CA authenticates the DHCP client according to the authorization request.

17. A DHCP client, **characterized by** comprising:
a sending module (1001), configured to send a DHCP discover message to a DHCP server, wherein the DHCP discover message comprises a URL of a CA and an identifier of the DHCP client;
a receiving module (1002), configured to receive a DHCP offer message sent by the DHCP server after the DHCP server authenticates the DHCP client, wherein the DHCP offer message comprises authorization information returned by the CA to the DHCP server; and
a authenticating module (1003), configured to authenticate the DHCP server according to the authorization information in the DHCP offer message received by the receiving module (1002).

18. The DHCP client according to claim 17, wherein the DHCP discover message received by the receiving module (1002) further comprises a signature performed by using a private key of the DHCP client, so that the DHCP client verifies the signature by using a public key of the DHCP client.

19. A DHCP client, **characterized by** comprising:
a sending module (1201), configured to send a DHCP discover message to a DHCP server;
a receiving module (1202), configured to receive a DHCP offer message sent by the DHCP server, wherein the DHCP offer message comprises authorization information returned by the CA to the DHCP server after the CA authenticates the DHCP client; and
a authenticating module (1203), configured to authenticate the DHCP server according to the authorization information in the DHCP offer message received by the receiving module (1202).

20. The DHCP client according to claim 19, wherein the DHCP discover message received by the receiving module (1202) further comprises a signature performed by using a private key of the DHCP client, so that the CA verifies the signature by using a public key of the DHCP client.

## Patentansprüche

1. Auf DHCP basierendes Authentifizierungsverfahren, **dadurch gekennzeichnet, dass** es umfasst:
Empfangen (101) einer DHCP-Discover-Nachricht, die durch einen DHCP-Client gesendet wurde, durch einen DHCP-Server, wobei die DHCP-Discover-Nachricht eine "Universal Resource Locator", URL, einer CA und einen Identifikator des DHCP-Clients umfasst;
Aufspüren (102) der CA gemäß der URL der CA durch den DHCP-Server und Senden einer Autorisierungsanfrage an die CA, wodurch die Autorisierungsanfrage den Identifikator des DHCP-Clients trägt;
Empfangen (103) von Autorisierungsinformationen, die von der CA zurückgegeben werden, durch den DHCP-Server, wobei die Autorisierungsinformationen ein Zertifikat des DHCP-Clients umfassen;
Authentifizieren (104) des DHCP-Clients gemäß dem Zertifikat des DHCP-Clients durch den DHCP-Server und
Senden (105) einer DHCP-Offer-Nachricht an den DHCP-Client durch den DHCP-Server, wobei die DHCP-Offer-Nachricht die Autorisierungsinformationen umfasst, die von der CA zurückgegeben werden, so dass der DHCP-Client den DHCP-Server gemäß den Autorisierungsinformationen authentifiziert.

2. Verfahren nach Anspruch 1, wobei die DHCP-Discover-Nachricht ferner umfasst: eine Signatur, die unter Verwendung eines privaten Schlüssels des DHCP-Clients durchgeführt wird; und
das Authentifizieren des DHCP-Clients gemäß dem Zertifikat des DHCP-Clients durch den DHCP-Server umfasst:
Verifizieren der Signatur unter Verwendung eines öffentlichen Schlüssels des DHCP-Clients, der in dem Zertifikat enthalten ist, durch den DHCP-Server.

3. Verfahren nach Anspruch 1, wobei
die von der CA zurückgegebenen Autorisierungsinformationen einen durch die CA produzierten Zufallsparameter umfassen; und das Verfahren nach dem Empfangen der durch die CA zurückgegebenen Autorisierungsinformationen durch den DHCP-Server ferner umfasst: Ableiten eines gemeinsamen Schlüssels gemäß dem Zufallsparameter durch den DHCP-Server, wobei der gemeinsame Schlüssel verwendet wird, um die Sicherheit der Kommunikation zwischen dem DHCP-Server und dem DHCP-Client zu schützen.

4. Verfahren nach Anspruch 3, wobei:
der Zufallsparameter durch einen sicheren Tunnel zwischen dem DHCP-Server und der CA durch den DHCP-Server empfangen wird;
oder
der Zufallsparameter mit einem öffentlichen Schlüssel des DHCP-Servers verschlüsselt wird, und demnach umfasst das Verfahren ferner vor dem Ableiten eines gemeinsamen Schlüssels gemäß dem Zufallsparameter durch den DHCP-Server:
Entschlüsseln des verschlüsselten Zufallsparameters unter Verwendung eines privaten Schlüssels des DHCP-Servers durch den DHCP-Server, um so den Zufallsparameter zu erfassen.

5. Verfahren nach Anspruch 1, wobei
die von der CA zurückgegebenen Autorisierungsinformationen einen durch die CA gemäß einem Zufallsparameter generierten gemeinsamen Schlüssel oder einen direkt durch die CA produzierten gemeinsamen Schlüssel umfassen; und das Verfahren nach dem Empfangen der durch die CA zurückgegebenen Autorisierungsinformationen durch den DHCP-Server ferner umfasst: Erfassen des gemeinsamen Schlüssels aus den Autorisierungsinformationen durch den DHCP-Server, wobei der gemeinsame Schlüssel verwendet wird, um die Sicherheit der Kommunikation zwischen dem DHCP-Server und dem DHCP-Client zu schützen.

6. Verfahren nach Anspruch 5, wobei:
der gemeinsame Schlüssel durch einen sicheren Tunnel zwischen dem DHCP-Server und der CA durch den DHCP-Server empfangen wird;
oder
der gemeinsame Schlüssel unter Verwendung eines öffentlichen Schlüssels des DHCP-Servers verschlüsselt wird, und demnach das Erfassen des gemeinsamen Schlüssels aus den Autorisierungsinformationen durch den DHCP-Server umfasst:
Entschlüsseln des verschlüsselten gemeinsamen Schlüssels unter Verwendung eines privaten Schlüssels des DHCP-Servers durch den DHCP-Server, um so den gemeinsamen Schlüssel zu erfassen.

7. Auf "Dynamic Host Configuration Protocol" basierendes, DHCP basierendes, Authentifizierungsverfahren, **dadurch gekennzeichnet, dass** es umfasst:
Empfangen (301) einer DHCP-Discover-Nachricht, die durch einen DHCP-Client gesendet wird, durch einen DHCP-Server,
Senden (302) einer Autorisierungsanfrage an eine Zertifikatautorität, CA, durch den DHCP-Server, wobei die Autorisierungsanfrage die DHCP-Discover-Nachricht umfasst;
Empfangen (303) von Autorisierungsinformationen, die von der CA zurückgegeben werden, durch den DHCP-Server, wobei die Autorisierungsinformationen durch die CA produziert werden, nachdem die CA den DHCP-Client gemäß der Autorisierungsanfrage authentifiziert; und
Senden (304) einer DHCP-Offer-Nachricht an den DHCP-Client durch den DHCP-Server, wobei die DHCP-Offer-Nachricht die Autorisierungsinformationen umfasst, die von der CA zurückgegeben werden, so dass der DHCP-Client den DHCP-Server gemäß den Autorisierungsinformationen authentifiziert.

8. Verfahren nach Anspruch 7, wobei die DHCP-Discover-Nachricht ferner umfasst: eine Signatur, die unter Verwendung eines privaten Schlüssels des DHCP-Clients durchgeführt wird; und
das Authentifizieren des DHCP-Clients gemäß der Autorisierungsanfrage durch die CA umfasst:
Authentifizieren der Signatur unter Verwendung eines öffentlichen Schlüssels des DHCP-Clients durch die CA.

9. Auf DHCP basierendes Authentifizierungsverfahren, **dadurch gekennzeichnet, dass** es umfasst:
Senden (201) einer DHCP-Discover-Nachricht an einen DHCP-Server durch einen DHCP-Client, wobei die DHCP-Discover-Nachricht eine URL einer CA und einen Identifikator des DHCP-Clients umfasst;
Empfangen (202) einer DHCP-Offer-Nachricht, die durch den DHCP-Server gesendet wird, nachdem der DHCP-Server den DHCP-Client authentifiziert hat, durch den DHCP-Client, wobei die DHCP-Offer-Nachricht Autorisierungsinformationen umfasst, die durch die CA an den DHCP-Server zurückgegeben werden; und
Authentifizieren (203) des DHCP-Servers gemäß den Autorisierungsinformationen durch den DHCP-Client.

10. Verfahren nach Anspruch 9, wobei die DHCP-Discover-Nachricht ferner eine Signatur umfasst, die unter Verwendung eines privaten Schlüssels des DHCP-Clients durchgeführt wird, so dass der DHCP-Server die Signatur unter Verwendung eines öffentlichen Schlüssels des DHCP-Clients verifiziert.

11. Auf DHCP basierendes Authentifizierungsverfahren, **dadurch gekennzeichnet, dass** es umfasst:
Senden (401) einer DHCP-Discover-Nachricht an einen DHCP-Server durch einen DHCP-Client;
Empfangen (402) einer DHCP-Offer-Nachricht, die durch den DHCP-Server gesendet wird, durch den DHCP-Client, wobei die DHCP-Offer-Nachricht Autorisierungsinformationen umfasst, die von einer CA an den DHCP-Server zurückgegeben wurden, nachdem die CA den DHCP-Client authentifiziert hat; und
Authentifizieren (403) des DHCP-Servers gemäß den Autorisierungsinformationen durch den DHCP-Client.

12. Verfahren nach Anspruch 11, wobei die DHCP-Discover-Nachricht ferner eine Signatur umfasst, die unter Verwendung eines privaten Schlüssels des DHCP-Clients durchgeführt wird, so dass der DHCP-Server die Signatur unter Verwendung eines öffentlichen Schlüssels des DHCP-Clients verifiziert.

13. DHCP-Server, **dadurch gekennzeichnet, dass** er umfasst:
ein Empfangsmodul (91), das zum Empfangen einer DHCP-Discover-Nachricht konfiguriert ist, die durch einen DHCP-Client gesendet wird, wobei die DHCP-Discover-Nachricht eine URL einer CA und einen Identifikator des DHCP-Clients umfasst; und ein Sendemodul (92), das zum Aufspüren der CA gemäß der URL der CA und Senden einer Autorisierungsanfrage an die CA konfiguriert ist, wodurch die Autorisierungsanfrage den Identifikator des DHCP-Clients trägt; wobei:
das Empfangsmodul (91) ferner zum Empfangen von Autorisierungsinformationen konfiguriert ist, die von der CA zurückgegeben werden, und die Autorisierungsinformationen ein Zertifikat des DHCP-Clients umfassen; und
der DHCP-Server ferner umfasst:
ein Authentifizierungsmodul (93), das zum Abschließen der Authentifizierung für den DHCP-Client gemäß dem Zertifikat des DHCP-Clients in den Autorisierungsinformationen konfiguriert ist, die von dem Empfangsmodul (91) empfangen werden; und
das Sendemodul (92) ferner zum Senden einer DHCP-Offer-Nachricht an den DHCP-Client konfiguriert ist, und die DHCP-Offer-Nachricht die Autorisierungsinformationen umfasst, die von der CA zurückgegeben und von dem Empfangsmodul (91) empfangen werden, so dass der DHCP-Client den DHCP-Server gemäß den Autorisierungsinformationen authentifiziert.

14. DHCP-Server nach Anspruch 13, wobei die von dem Empfangsmodul (91) empfangene DHCP-Discover-Nachricht ferner eine Signatur umfasst, die unter Verwendung eines privaten Schlüssels des DHCP-Clients durchgeführt wird; und
das Authentifizierungsmodul (93) speziell konfiguriert ist, um die Signatur unter Verwendung eines öffentlichen Schlüssels des DHCP-Clients in dem Zertifikat des DHCP-Clients in den Autorisierungsinformationen zu verifizieren, die durch das Empfangsmodul (91) empfangen werden.

15. DHCP-Server, **dadurch gekennzeichnet, dass** er umfasst:
ein Empfangsmodul (1101), das zum Empfangen einer DHCP-Discover-Nachricht konfiguriert ist, die durch einen DHCP-Client gesendet wird; und
ein Sendemodul (1102), das zum Senden einer Autorisierungsanfrage an eine CA gemäß der DHCP-Discover-Nachricht konfiguriert ist, die von dem Empfangsmodul (1101) empfangen wird, wobei die Autorisierungsanfrage die DHCP-Discover-Nachricht umfasst; wobei:
das Empfangsmodul (1101) ferner zum Empfangen von Autorisierungsinformationen konfiguriert ist, die von der CA zurückgegeben werden, und die Autorisierungsinformationen durch die CA produziert werden, nachdem die CA den DHCP-Client gemäß der Autorisierungsanfrage authentifiziert; und
das Sendemodul (1102) ferner zum Senden einer DHCP-Offer-Nachricht an den DHCP-Client konfiguriert ist, und die DHCP-Offer-Nachricht die Autorisierungsinformationen umfasst, die von der CA zurückgegeben und von dem Empfangsmodul (1101) empfangen werden, so dass der DHCP-Client den DHCP-Server gemäß den Autorisierungsinformationen authentifiziert.

16. DHCP-Server nach Anspruch 15, wobei die von dem Empfangsmodul (1101) empfangene DHCP-Discover-Nachricht ferner eine Signatur umfasst, die unter Verwendung eines privaten Schlüssels des DHCP-Clients durchgeführt wird; und
die durch das Empfangsmodul (1101) empfangenen Autorisierungsinformationen durch die CA produziert werden, nachdem die CA den DHCP-Client gemäß der Autorisierungsanfrage authentifiziert hat.

17. DHCP-Client, **dadurch gekennzeichnet, dass** er umfasst:
ein Sendemodul (1001), das zum Senden einer DHCP-Discover-Nachricht an einen DHCP-Server konfiguriert ist, wobei die DHCP-Discover-Nachricht eine URL einer CA und einen Identifikator des DHCP-Clients umfasst;
ein Empfangsmodul (1002), das zum Empfangen einer DHCP-Offer-Nachricht konfiguriert ist, die durch den DHCP-Server gesendet wird, nachdem der DHCP-Server den DHCP-Client authentifiziert hat, wobei die DHCP-Offer-Nachricht Autorisierungsinformationen umfasst, die durch die CA an den DHCP-Server zurückgegeben werden; und
ein Authentifizierungsmodul (1003), das zum Authentifizieren des DHCP-Servers gemäß den Autorisierungsinformationen in der DHCP-Offer-Nachricht, die von dem Empfangsmodul (1002) empfangen wird, konfiguriert ist.

18. DHCP-Client nach Anspruch 17, wobei die von dem Empfangsmodul (1002) empfangene DHCP-Discover-Nachricht ferner eine Signatur umfasst, die unter Verwendung eines privaten Schlüssels des DHCP-Clients durchgeführt wird, so dass der DHCP-Client die Signatur unter Verwendung eines öffentlichen Schlüssels des DHCP-Clients verifiziert.

19. DHCP-Client, **dadurch gekennzeichnet, dass** er umfasst:
ein Sendemodul (1201), das zum Senden einer DHCP-Discover-Nachricht an einen DHCP-Server konfiguriert ist;
ein Empfangsmodul (1202), das zum Empfangen einer DHCP-Offer-Nachricht konfiguriert ist, die von dem DHCP-Server gesendet wird, wobei die DHCP-Offer-Nachricht Autorisierungsinformationen umfasst, die von der CA an den DHCP-Server zurückgegeben werden, nachdem die CA den DHCP-Client authentifiziert hat; und
ein Authentifizierungsmodul (1203), das zum Authentifizieren des DHCP-Servers gemäß den Autorisierungsinformationen in der DHCP-Offer-Nachricht, die von dem Empfangsmodul (1202) empfangen wird, konfiguriert ist.

20. DHCP-Client nach Anspruch 19, wobei die von dem Empfangsmodul (1202) empfangene DHCP-Discover-Nachricht ferner eine Signatur umfasst, die unter Verwendung eines privaten Schlüssels des DHCP-Clients durchgeführt wird, so dass die CA die Signatur unter Verwendung eines öffentlichen Schlüssels des DHCP-Clients verifiziert.

## Revendications

1. Procédé d'authentification basé DHCP, **caractérisé en ce qu'**il comprend les étapes suivantes :
recevoir (101), par un serveur DHCP, un message de découverte DHCP envoyé par un client DHCP, le message de découverte DHCP comportant un localisateur uniforme de ressources, URL, d'un CA et un identifiant du client DHCP ;
découvrir (102), par le serveur DHCP, le CA selon l'URL du CA, et envoyer une requête d'autorisation au CA, la requête d'autorisation contenant l'identifiant du client DHCP ;
recevoir (103), par le serveur DHCP, des informations d'autorisation retournées par le CA, les informations d'autorisation comportant un certificat du client DHCP ;
authentifier (104), par le serveur DHCP, le client DHCP selon le certificat du client DHCP ; et
envoyer (105), par le serveur DHCP, un message d'offre DHCP au client DHCP, le message d'offre DHCP comportant les informations d'autorisation retournées par le CA, afin que le client DHCP authentifie le serveur DHCP selon les informations d'autorisation.

2. Procédé selon la revendication 1, dans lequel le message de découverte DHCP comporte en outre : une signature exécutée en utilisant une clé privée du client DHCP ; et
l'étape consistant à authentifier, par le serveur DHCP, le client DHCP selon le certificat du client DHCP comprend :
vérifier, par le serveur DHCP, la signature en utilisant une clé publique du client DHCP comprise dans le certificat.

3. Procédé selon la revendication 1, dans lequel :
les informations d'autorisation retournées par le CA comportent un paramètre aléatoire produit par le CA ; et après l'étape consistant à recevoir, par le serveur DHCP, les informations d'autorisation retournées par le CA, le procédé comprend en outre : dériver, par le serveur DHCP, une clé partagée selon le paramètre aléatoire, la clé partagée étant utilisée pour protéger la sécurité de la communication entre le serveur DHCP et le client DHCP.

4. Procédé selon la revendication 3, dans lequel :
le paramètre aléatoire est reçu par le serveur DHCP par l'intermédiaire d'un tunnel sécurisé entre le serveur DHCP et le CA ;
ou
le paramètre aléatoire est crypté en utilisant une clé publique du serveur DHCP, et en conséquence, avant l'étape consistant à dériver, par le serveur DHCP, une clé partagée selon le paramètre aléatoire, le procédé comprend en outre :
décrypter, par le serveur DHCP, le paramètre aléatoire crypté en utilisant une clé privée du serveur DHCP, afin d'acquérir le paramètre aléatoire.

5. Procédé selon la revendication 1, dans lequel :
les informations d'autorisation retournées par le CA comportent une clé partagée générée par le CA selon un paramètre aléatoire ou une clé partagée produite directement par le CA ; et après l'étape consistant à recevoir, par le serveur DHCP, les informations d'autorisation retournées par le CA, le procédé comprend en outre :
acquérir, par le serveur DHCP, la clé partagée à partir des informations d'autorisation, la clé partagée étant utilisée pour protéger la sécurité de la communication entre le serveur DHCP et le client DHCP.

6. Procédé selon la revendication 5, dans lequel :
la clé partagée est reçue par le serveur DHCP par l'intermédiaire d'un tunnel sécurisé entre le serveur DHCP et le CA ;
ou
la clé partagée est cryptée en utilisant une clé publique du serveur DHCP ; et en conséquence, l'étape consistant à acquérir la clé partagée par le serveur DHCP à partir des informations d'autorisation comprend :
décrypter, par le serveur DHCP, la clé partagée cryptée en utilisant une clé privée du serveur DHCP, afin d'acquérir la clé partagée.

7. Procédé d'authentification basé DHCP, protocole de configuration d'hôte dynamique, **caractérisé en ce qu'**il comprend les étapes suivantes :
recevoir (301), par un serveur DHCP, un message de découverte DHCP envoyé par un client DHCP ;
envoyer (302), par le serveur DHCP, une requête d'autorisation à une autorité de certification, CA, la requête d'autorisation comportant le message de découverte DHCP;
recevoir (303), par le serveur DHCP, des informations d'autorisation retournées par le CA, les informations d'autorisation étant produites par le CA après que le CA a authentifié le client DHCP selon la requête d'autorisation ; et
envoyer (304), par le serveur DHCP, un message d'offre DHCP au client DHCP, le message d'offre DHCP comportant les informations d'autorisation retournées par le CA, afin que le client DHCP authentifie le serveur DHCP selon les informations d'autorisation.

8. Procédé selon la revendication 7, dans lequel le message de découverte DHCP comporte en outre : une signature exécutée en utilisant une clé privée du client DHCP ; et
l'étape consistant à authentifier, par le CA, le client DHCP selon la requête d'autorisation comprend :
authentifier, par le CA, la signature en utilisant une clé publique du client DHCP.

9. Procédé d'authentification basé DHCP, **caractérisé en ce qu'**il comprend les étapes suivantes :
envoyer (201), par un client DHCP, un message de découverte DHCP à un serveur DHCP, le message de découverte DHCP comportant une URL d'un CA et un identifiant du client DHCP ;
recevoir (202), par le client DHCP, un message d'offre DHCP envoyé par le serveur DHCP après que le serveur DHCP a authentifié le client DHCP, le message d'offre DHCP comportant des informations d'autorisation retournées par le CA au serveur DHCP ; et
authentifier (203), par le client DHCP, le serveur DHCP selon les informations d'autorisation.

10. Procédé selon la revendication 9, dans lequel le message de découverte DHCP comprend en outre une signature exécutée en utilisant une clé privée du client DHCP, afin que le serveur DHCP vérifie la signature en utilisant une clé publique du client DHCP.

11. Procédé d'authentification basé DHCP, **caractérisé en ce qu'**il comprend les étapes suivantes :
envoyer (401), par un client DHCP, un message de découverte DHCP à un serveur DHCP;
recevoir (402), par le client DHCP, un message d'offre DHCP envoyé par le serveur DHCP, le message d'offre DHCP comportant des informations d'autorisation retournées par un CA au serveur DHCP après que le CA a authentifié le client DHCP ; et
authentifier (403), par le client DHCP, le serveur DHCP selon les informations d'autorisation.

12. Procédé selon la revendication 11, dans lequel le message de découverte DHCP comprend en outre une signature exécutée en utilisant une clé privée du client DHCP, afin que le serveur DHCP vérifie la signature en utilisant une clé publique du client DHCP.

13. Serveur DHCP, **caractérisé en ce qu'**il comprend :
un module de réception (91), configuré pour recevoir un message de découverte DHCP envoyé par un client DHCP, le message de découverte DHCP comportant une URL d'un CA et un identifiant du client DHCP ; et
un module d'envoi (92), configuré pour découvrir le CA, selon l'URL du CA et envoyer une requête d'autorisation au CA, la requête d'autorisation contenant l'identifiant du client DHCP ;
le module de réception (91) étant en outre configuré pour recevoir des informations d'autorisation retournées par le CA, et les informations d'autorisation comportant un certificat du client DHCP ; et
le serveur DHCP comprend en outre :
un module d'authentification (93), configuré pour effectuer une authentification pour le client DHCP selon le certificat du client DHCP dans les informations d'autorisation reçues par le module de réception (91) ; et
le module d'envoi (92) est en outre configuré pour envoyer un message d'offre DHCP au client DHCP, et le message d'offre DHCP comporte les informations d'autorisation retournées par le CA et reçues par le module de réception (91), afin que le client DHCP authentifie le serveur DHCP selon les informations d'autorisation.

14. Serveur DHCP selon la revendication 13, dans lequel le message de découverte DHCP reçu par le module de réception (91) comporte en outre une signature exécutée en utilisant une clé privée du client DHCP ; et
le module d'authentification (93) est configuré spécifiquement pour vérifier la signature en utilisant une clé publique du client DHCP présente dans le certificat du client DHCP dans les informations d'autorisation reçues par le module de réception (91).

15. Serveur DHCP, **caractérisé en ce qu'**il comprend :
un module de réception (1101), configuré pour recevoir un message de découverte DHCP envoyé par un client DHCP ; et
un module d'envoi (1102), configuré pour envoyer une requête d'autorisation à un CA selon le message de découverte DHCP reçu par le module de réception (1101), la requête d'autorisation comportant le message de découverte DHCP ;
le module de réception (1101) étant en outre configuré pour recevoir des informations d'autorisation retournées par le CA, et les informations d'autorisation étant produites par le CA après que le CA a authentifié le client DHCP selon la requête d'autorisation ; et
le module d'envoi (1102) étant en outre configuré pour envoyer un message d'offre DHCP au client DHCP, et le message d'offre DHCP comportant les informations d'autorisation retournées par le CA et reçues par le module de réception (1101), afin que le client DHCP authentifie le serveur DHCP selon les informations d'autorisation.

16. Serveur DHCP selon la revendication 15, dans lequel le message de découverte DHCP reçu par le module de réception (1101) comprend en outre une signature exécutée en utilisant une clé privée du client DHCP ; et
les informations d'autorisation reçues par le module de réception (1101) sont produites par le CA après que le CA a authentifié le client DHCP selon la requête d'autorisation.

17. Client DHCP, **caractérisé en ce qu'**il comprend :
un module d'envoi (1001), configuré pour envoyer un message de découverte DHCP à un serveur DHCP, le message de découverte DHCP comportant une URL d'un CA et un identifiant du client DHCP ;
un module de réception (1002), configuré pour recevoir un message d'offre DHCP envoyé par le serveur DHCP après que le serveur DHCP a authentifié le client DHCP, le message d'offre DHCP comportant des informations d'autorisation retournées par le CA au serveur DHCP ; et
un module d'authentification (1003), configuré pour authentifier le serveur DHCP selon les informations d'autorisation contenues dans le message d'offre DHCP reçu par le module de réception (1002).

18. Client DHCP selon la revendication 17, dans lequel le message de découverte DHCP reçu par le module de réception (1002) comprend en outre une signature exécutée en utilisant une clé privée du client DHCP, afin que le client DHCP vérifie la signature en utilisant une clé publique du client DHCP.

19. Client DHCP, **caractérisé en ce qu'**il comprend :
un module d'envoi (1201), configuré pour envoyer un message de découverte DHCP à un serveur DHCP ;
un module de réception (1202), configuré pour recevoir un message d'offre DHCP envoyé par le serveur DHCP, le message d'offre DHCP comportant des informations d'autorisation retournées par le CA au serveur DHCP après que le CA a authentifié le client DHCP ; et
un module d'authentification (1203), configuré pour authentifier le serveur DHCP selon les informations d'autorisation contenues dans le message d'offre DHCP reçu par le module de réception (1202).

20. Client DHCP selon la revendication 19, dans lequel le message de découverte DHCP reçu par le module de réception (1202) comprend en outre une signature exécutée en utilisant une clé privée du client DHCP, afin que le CA vérifie la signature en utilisant une clé publique du client DHCP.
